(19) **Europäisches Patentamt / European Patent Office / Office européen des brevets**

(11) **EP 1 835 668 B1**

(12) **EUROPEAN PATENT SPECIFICATION**

(45) Date of publication and mention
of the grant of the patent:
**14.05.2008 Bulletin 2008/20**

(51) Int Cl.:
*H04L 12/56* (2006.01)    *H04L 12/24* (2006.01)

(21) Application number: **06005086.1**

(22) Date of filing: **13.03.2006**

(54) **Method and apparatus for controlling transmission of data from a plurality of sensor nodes**

Verfahren und Vorrichtung zur Steuerung der Übertragung von Daten aus mehreren Sensorknoten

Procédé et dispositif pour contrôler la transmission de données issues de plusieurs noeuds de capteurs

(84) Designated Contracting States:
**DE GB**

(43) Date of publication of application:
**19.09.2007 Bulletin 2007/38**

(73) Proprietor: **NTT DoCoMo, Inc.**
**Tokyo 100-6150 (JP)**

(72) Inventors:
- **Sgroi, Marco**
  **80331 München (DE)**
- **El Essaili, Ali**
  **80937 München (DE)**
- **Kellerer, Wolfgang**
  **82256 Fuerstenfeldbruck (DE)**

(74) Representative: **Schoppe, Fritz et al**
**Patentanwälte**
**Schoppe, Zimmermann, Stöckeler & Zinkler**
**Postfach 246**
**82043 Pullach bei München (DE)**

(56) References cited:
- **AKKAYA K ET AL: "A survey on routing protocols for wireless sensor networks" AD HOC NETWORKS, ELSEVIER, vol. 3, no. 3, May 2005 (2005-05), pages 325-349, XP004848801 ISSN: 1570-8705**
- **HYUN-SOOK KIM ET AL: "A Power Efficient Routing Protocol Based on Balanced Tree in Wireless Sensor Networks" DISTRIBUTED FRAMEWORKS FOR MULTIMEDIA APPLICATIONS, 2005. DFMA '05. FIRST INTERNATIONAL CONFERENCE ON BESONCON, FRANCE 06-09 FEB. 2005, PISCATAWAY, NJ, USA,IEEE, 6 February 2005 (2005-02-06), pages 138-143, XP010770239 ISBN: 0-7695-2273-4**
- **AKKAYA K ET AL: "Efficient aggregation of delay-constrained data in wireless sensor networks" COMPUTER SYSTEMS AND APPLICATIONS, 2005. THE 3RD ACS/IEEE INTERNATIONAL CONFERENCE ON CAIRO, EGYPT JAN. 3-6, 2005, PISCATAWAY, NJ, USA, IEEE, 3 January 2005 (2005-01-03), pages 904-909, XP010777830 ISBN: 0-7803-8735-X**
- **IAN F AKYILDIZ ET AL: "A Survey on Sensor Networks" IEEE COMMUNICATIONS MAGAZINE, IEEE SERVICE CENTER, PISCATAWAY, US, vol. 40, no. 8, August 2002 (2002-08), pages 102-114, XP011092904 ISSN: 0163-6804**

EP 1 835 668 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to the field of wireless networks and in particular to the field of Wireless Sensor Networks (WSN).

Wireless Sensor Networks (WSNs) are composed of a large number of nodes with RF (Radio Frequency) communication capabilities that are deeply embedded in the environment and have very limited resources. Energy is the most critical resource because WSN nodes are usually powered by small batteries. To maximize network or system lifetime it is essential that protocols are highly optimized to reduce energy consumption and are adaptive to variations of external parameters.

Energy-efficiency in WSNs with static topologies and predictable traffic load is usually best achieved using TDMA-based (Time Division Multiple Access) schemes that set nodes to sleep mode when they are not communicating and prevent energy consumption due to idle listening and overhearing. The selection of the routes from source to destination should also minimize energy consumption by avoiding depletion of few nodes and therefore interruptions in the connectivity.

Several Routing and medium access control (MAC) protocols have been proposed for WSNs, as described by I. Akyildiz, W. Su, W. Snakrasubramaniam, E. Cayirci. A Survey on Sensor Networks. IEEE Communications, Aug. 2002, in the following referred to as [9]. Differently from traditional networks that are optimized for throughput and delay, WSNs must be optimized mostly for energy consumption to maximize network lifetime. Due to the relevant amount of energy dissipated when a node is idle listening to the channel, the most efficient schemes are those that have a low duty cycle and keep nodes in sleep state as long as possible. K. Langendoen and G. Halkes: Energy-Efficient Medium Access Control Book chapter in the Embedded Systems Handbook, R. Zurawski (editor), CRC press, August 2005, in the following referred to as [6], surveys the most relevant MACs for WSNs. TDMA-based MACs minimize idle listening, overhearing and collisions. Therefore, they can allow significant energy savings and improve reliability especially in WSNs with static topology and predictable traffic patterns. However, time-based node scheduling also adds overhead due to node synchronization and schedule computation and distribution. For this reason, TDMA MAC scheduling is usually applied within network clusters and managed by the cluster-head. Collision-based MACs are more suitable for dynamic networks with unpredictable load and low traffic. Protocols, such as S-MAC, as described by Ye, J. Heidemann, D. Estrin, in "An Energy-efficient MAC Protocol for Wireless Sensor Networks", INFOCOM 2002, in the following referred to as [11], and DMAC as described by G. Lu, B. Krishnamachari, C. Raghavendra in "An adaptive energy-efficient and low latency MAC for data Gathering in wireless sensor networks", 18th International Parallel and Distributed Processing Symposium (IPDPS'04), in the following referred to as [2], offer a hybrid solution, where the idle listening time of contention-based protocols is reduced by synchronizing nodes and applying duty cycling.

TDMA-based schedules are usually computed by traversing a convergecast tree defined by the path connecting all the source nodes to the data sink, and assigning time slots so that energy consumption and delay in data delivery are minimized. At V.Annamalai, S. Gupta and L.Schwiebert, "On Tree-Based Convergecasting in Wireless Sensor Networks", IEEE Wireless Communications and Networking Conference, 2003. WCNC 2003, in the following referred to as [1], the convergecast tree is defined taking into account only the distance between nodes and the schedule is optimized for data delivery time. Delay is the primary optimization target also in S. Coleri. Pedamacs: Power Efficient and Delay Aware Medium Access Protocol for Sensor Networks. M.S. Thesis, UC Berkeley, Dec 2002, in the following also referred to as [13], which addresses the problem of finding the smallest length conflict-free assignment of slots during which packets generated at each node reach their destination. In K. Arisha, M. Younis, M. Youssef. Energy-Aware TDMA-Based MAC for Sensor Networks. Proceedings of the IEEE Integrated Management of Power Aware Communications, Computing and Networking (IMPACCT 2002), in the following referred to as [3], paths are periodically computed applying the shortest path DIJKSTRA algorithm and using an objective function that takes into account the energy of the nodes, the location and the delay. Then, slots are assigned to the nodes in a breadth first search (BFS) or depth first search (DFS) manner such that each time slot is assigned to one transmission link at the same time. Ye, J. Heidemann, D. Estrin, "An Energy-efficient MAC Protocol for Wireless Sensor Networks", INFOCOM 2002, in the following referred to as [10], defines a data-centric routing solution for a scenario in which all nodes measure the same kind of data and where routes are selected to allow data aggregation.

Self-stabilizing static scheduling, as described by S. Kulkarni, M. Arumugam, "TDMA Service for Sensor Networks", ICDCS Workshops 2004, in the following referred to as [12], defines a fixed schedule for WSNs with rectangular or hexagonal grid topologies and for the entire lifetime of the network. The limit of this approach is that it applies only to certain regular topologies and does not update the schedule based on the variations of energy level of the nodes during network operation. W. Heinzelmann, A. Chandrakasan, H. Balakrishnan in "Energy-efficient communication protocols for wireless microsensor networks", Proceedings of Hawaii International Conference on System Sciences, Jan 2000, in the following referred to as [4], jointly optimize Routing and MAC protocols using linear programming techniques and define variable length slots based on the routing requirements.

Summarizing the aforementioned, it can be said that known approaches like [3] optimize the route from each node to the data sink for each node individually based on the nodes' energy levels by shortest path algorithms, and transmit each data from each node individually to the data sink, or [10] optimize only the routes from each node to the data sink based on optimizing aggregation possibilities. Thus, these solutions reduce energy consumption but still lead to a depletion of specific nodes, which is especially true for approaches like described in [10].

The publication "A Survey on Routing Protocols for Wireless Sensor Networks" by Akkaya et al. provides a survey about different routing protocols for wireless sensor networks, and in particular about data-centric approaches, hierarchical approaches and location based approaches. Data-centric protocols are query-based and depend on the naming of desired data, which helps in eliminating many redundant transmissions. Hierarchical protocols aim at clustering the nodes so that cluster-heads, also referred to as gateways, can do some aggregation and reduction of data in order to save energy. The Location-based protocols utilize the position information to relay the data to the desired regions, rather than the whole network. Data aggregation is the combination of data from different sources by using functions such a suppression (eliminating duplicates), min, max and average functions. In data-centric routing, the sink sends queries to certain regions and waits for data from the sensors located in the selected regions. The main aim of hierarchical routing is to efficiently maintain the energy consumption of the sensor nodes by involving them in multi-hop communication within a particular cluster and be performing data aggregation and fusion in order to decrease the number of transmitted messages to the sink. Cluster formation is typically based on the energy reserve of sensors and sensor's proximity to the cluster head. The publication describes an approach, which is called PEGASIS. This approach forms chains from sensor nodes so that each node transmits and receives from a neighbor and only one node is selected from that chain to transmit to the base station (sink). Gathered data moves from node to node, aggregated and eventually sent to the base station. The publication, furthermore, describes an energy-aware routing for cluster-based sensor networks, where sensors are grouped into clusters prior to network operations. The algorithm employs cluster heads, namely gateways, which are less energy constrained than sensors and assumed to know the location of sensor nodes. TDMA-based MAC is used for nodes to send data to the gateway. The nodes can be in one of four main states: sensing only, relaying only, sensing-relaying, and inactive.

The publication" A Power Efficient Routing Protocol Based on Balanced Tree in Wireless Sensor Networks" by Hyun-sook Kim et al. describes a balanced aggregation tree routing protocol, where the sensor nodes, including the sink and the network have an equal transmission range. The nodes aggregate or fuse the data they receive from the others with their own data, and produce only one packet regardless of how many packets they receive.

The publication "Efficient Aggregation of Delay-Constrained Data in Wireless Sensor Networks" by Kemal Akkaya et al describes an extension of best-effort aggregation-based routing to delay-constrained routing. Achieving the least energy consumption through data aggregation is modeled as a minimum Steiner tree problem for unconstrained aggregation.

For constrained aggregation, the proposed algorithm checks for each source whether the unconstrained routes can meet the delivery deadlines or not. This is done by trying to find a valid service ratio value "r" which is a bandwidth ratio and is used in allocating the amount of bandwidth to be dedicated to the real-time and non-real-time traffic on a particular outgoing link. If the current route for a source is not sufficient to meet the delay requirements, a new routing is determined to meet the delay constraints.

It is the object of the present invention to provide an improved method and apparatus for optimizing the routing and/or scheduling of data transmission within a multi-hop network to avoid an "early" depletion of specific nodes and to enhance the network service life.

The object is achieved by a method for controlling a transmission of data according to claims 1 and 11, a computer program according to claim 12 and an apparatus for controlling a transmission of data according to claim 13.

The invention provides a method for controlling a transmission of data from a plurality of sensor nodes to a monitor node of a network; comprising the following step:

generating a graph for said sensor nodes and said monitor node, wherein edges of said graph connect pairs of sensor nodes to each other or connect a sensor node to said monitor node based on a distance between respective nodes;

obtaining for each of said sensor nodes an associated energy level or associated energy consumption;

assigning a weight to each edge of said graph depending on said energy level or said energy consumption and a possibility for data aggregation of data being of a same data type, wherein a higher energy level or a lower energy consumption of a sensor node and a higher possibility for data aggregation result in a weight increasing a probability of selecting an edge connected to said sensor node in a step of defining a routing tree;

defining a routing tree including for each of said sensor nodes a route for transmitting said data from said sensor node to said monitor node, such that an overall weight of said routing tree is minimized if a lower weight indicates a higher probability of selection or is maximized if a higher weight indicates a higher probability of selection; and

assigning said routes to said plurality of sensor nodes and to said monitor node.

Furthermore, the invention provides a method for controlling a transmission of data from a plurality of sensor nodes to a monitor node of a network, comprising the following steps:

defining for each of said plurality of sensor nodes and for said monitor node a schedule for transmitting or receiving said data, wherein the step of defining is based on a routing tree of said network and considers a possibility for data aggregation of data being of a same data type, such that in case said sensor receives according to said routing tree data of the same data type itself measures data of or receives two or more data of the same data type, only a transmission of one data of said data type is considered.

The invention provides an apparatus for controlling a transmission of data from a plurality of sensor nodes to a monitor node of a network, comprising:

means for generating a graph for said sensor nodes and said monitor node, wherein edges of said graph connect pairs of sensor nodes to each other, or connect a sensor node to said monitor node based on a distance between respective nodes;

means for obtaining for each of said sensor nodes an associated energy level or energy consumption;

means for assigning a weight to each edge of said graph depending on said energy level or said energy consumption and a possibility for data aggregation of data being of a same data type, wherein a higher energy level or a lower energy consumption of a sensor node and a higher possibility for data aggregation result in a weight increasing a probability of selecting an edge connected to said sensor node in a step of defining a routing tree;

means for defining a routing tree including for each of said sensor nodes a route for transmitting said data from said sensor node to said monitor node, such that an overall weight of said routing tree is minimized if a lower weighting indicates a higher probability of selection or maximized if a higher weighting indicates a higher probability of selection; and

means for assigning said routes to said plurality of sensor nodes and to said monitor node.

The present invention is based on the finding that in networks where the aggregation of data is possible because the data sink does not need each data individually, an aggregation of data can reduce the amount of data to be transmitted and thus reduces power consumption of the overall network and in particular the power consumption of those nodes, which receive and transmit data from other nodes, i.e. act as hops and which are also referred to as relays or hubs.
Thus, methods which optimize the routing based on the energy level or energy consumption and the possibilities for data aggregation of, for example, data of the same data type can enhance the service life of a network.
The invention is furthermore based on the finding that the network service life can also be optimized, if a scheduling is based on aggregation possibilities and that it can even be further optimized if routing and scheduling are jointly optimized based on lower layer information like the nodes' energy level or energy consumption and upper layer information like data type and possibilities of data aggregation.
One embodiment of the present invention provides a method for optimising the routing based on the energy levels and/or energy consumption of the sensor nodes and the data types, or to be more specific, on the possibilities to aggregate data of the same data types. Thus, this embodiment of the present invention already reduces the amount of data to be transmitted and thus accordingly the power consumption of individual nodes and the network overall.
In a preferred embodiment of the present invention the routing is repeated periodically to provide on one hand a load balancing scheme, i.e. avoid or reduce the usage of those nodes as hops which already have a lower energy level compared to other nodes, and/or to adapt the routing due to an introduction of additional nodes or disappearance of nodes or changes of the nodes' locations.
Another embodiment of the present invention optimizes the scheduling, i.e. allocation of time slots to nodes and transmission links based on the possibilities for data aggregation. Sensor nodes which receive data of the same data type they measure themselves or which receive data of the same data type from different nodes are preferably scheduled such that they first receive all data of the same data type, aggregate this data to one data and only transmit this "aggregated" data. Thus, the power consumption of these hops is reduced, as normally aggregation of data is less power consuming than the transmission of individual data, and at the same time it allows to reduce the number of required time slots for transmitting the data and accordingly reduces the overall transmission period necessary for transmitting all data from all nodes to the monitor node.

The invention furthermore provides a method for controlling a transmission of data, wherein the transmission of data is based on an optimized route selection based on parameters from different layers, and/or wherein the transmission of data is based on an optimized node scheduling that uses routes selected at a previous step while minimizing a delay.

Both, the inventive routing and the inventive scheduling can be used in networks comprising nodes which measure different data types and for networks comprising only nodes which all measure the same kind of data.

In a preferred embodiment of the present invention the method and apparatus for controlling a transmission jointly optimize the routing and the scheduling based on the key parameters energy level or energy consumption and aggregation possibilities.

Although in the following embodiments will be discussed, wherein only data of the same data type is aggregated, the inventive solution can also be used for networks where a combination, i.e. aggregation of data of different types is of interest.

Furthermore, a preferred embodiment of the present invention provides a scheduling which allows a parallel or overlapping transmission of data on different data links in case they do not interfere with each other, thus, furthermore reducing the time for transmitting all data from all nodes to the monitor node.

In a preferred embodiment the routing, the scheduling and/or both jointly are periodically repeated for load balancing and/or adaptation to changes within the network or network parameters.

Preferred embodiments of the present invention are described in detail with respect to the following figures:

Fig. 1A    shows a flow chart of an embodiment of an inventive method for controlling a transmission, wherein the routing is based on energy level or energy consumption of the nodes and a possibility for data aggregation:

Fig. 1B    shows a flow chart of an embodiment of the inventive method for controlling a scheduling of a transmission, wehrein the scheduling is based on a possibility for data aggregation;

Fig. 2A    shows an exemplary cross-layer network architecture;

Fig. 2B    shows a flow chart of a preferred embodiment of the present invention comprising a periodic repetition of route selection (RS) and node scheduling (NS);

Fig. 2C    shows an exemplary time diagram with n data delivery periods (DDP) per route selection (RS) and node scheduling (NS) round;

Fig. 3    shows an exemplary network scenario with equidistant nodes, wherein each node has only one sensor measuring one specific parameter of three possible parameters;

Fig. 4A    shows parameters relevant to route optimization;

Fig. 4B    shows an embodiment of the inventive method for controlling the routing (RS route selection);

Fig. 5    shows three exemplary monitor distance cases and their related relative weights;

Fig. 6    shows exemplary aggregation cases with their relative weights;

Fig. 7    shows exemplary graphs and a resulting tree illustrating the steps the embodiment of the inventive method for controlling the routing according to Fig. 4B;

Fig. 8A    shows an exemplary algorithm (node scheduling NS) for performing the inventive method for controlling a scheduling;

Fig. 8B    shows exemplary trees for illustrating the node scheduling (NS) algorithm steps according to Fig. 8A;

Fig. 9    shows graphs of simulation results based on a variation of certain parameters, in Fig. 9a) the influence of the relative weight of the energy level depending on different node densities is shown, in Fig. 9b) the influence of the relative weight of the power consumption is shown, and in Figs. 9c) and 9d) the influence of the relative weight of the monitor distance in combination with the relative weight of the power consumption is shown;

Fig. 10    shows simulation results for different relative weights for the aggregation and their impact on average energy consumption, see Fig. 10a), and the data delivery period, see Fig. 10b), and Fig. 10c) shows the impact of different relative weights for the node distance for the normalized average energy consumption in dependence on a communication range;

Fig. 11    shows three exemplary scenarios for parameter type distributions;

Fig. 12    shows two scenarios for routes from the sensor nodes to the monitor node;

Fig. 13    shows a chart comparing the network life time of the three scenarios of parameter type distributions according to Fig. 11, for the two route scenarios according to Fig. 12 in comparison to a preferred embodiment (RS/NS) of the inventive method;

Fig. 14A    shows an exemplary use case for the present invention on a golf course;

Fig. 14B    shows an exemplary use case for the invention in a car garage.

Depending on the context the term "node" refers in the following to sensor node, hop and/or monitoring node to avoid unnecessary repetitions.

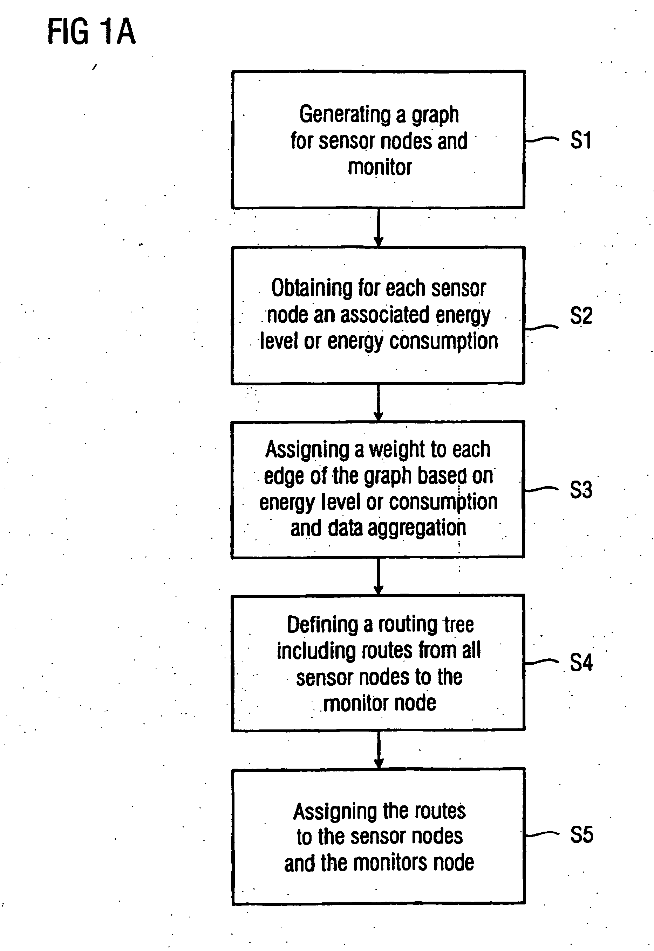

Fig. 1A shows an embodiment of the inventive method for controlling a transmission of data optimising the routing and comprising the steps S1 to S5.

In step S1 a graph for the sensor nodes and the monitor node of a network is generated. The locations, for example provided as coordinates or relative distances or coordinates in respect to other nodes, are, typically either known or transmitted by said sensor nodes. The edges of said graph connect pairs of sensor nodes to each other or connect a sensor node to said monitor node based on a distance between these nodes, for example, if the distance between nodes is higher than a certain threshold distance, no edge is assigned to the graph.

In step S2 for each of said sensor nodes an associated energy level or associated energy consumption is obtained, for example, by modelling a power consumption of each node based on a initial energy level or by receiving real energy levels or energy consumptions measured by the sensor nodes themselves.

In step S3 a weight to each edge of said graph is assigned depending on said energy level or said energy consumption and a possibility for data aggregation of data being of the same data type. Which data type each sensor node measures can, for example, be known (e.g. fixed for the whole service life or changing to a predetermined schedule), or transmitted from the sensor nodes (for example once initially or periodically updated).

The weights are assigned such that a higher energy level or a lower energy consumption of a sensor node and a higher possibility for data aggregation result in a weight increasing a probability of selecting an edge connected to said sensor node in a step of defining a routing tree.

Step S4 defines a routing tree including for each of said sensor nodes a route for transmitting said data from said sensor node to said monitor node such that an overall weight of said routing tree is optimized. The optimization can be, for example, a minimization, in this case low weights of the edges indicate a higher probability of selection or a maximization, in this case, higher weights of the edges indicate a higher probability of selection. Possible algorithms for defining a routing tree include the maximum spanning tree (MST) algorithm or the shortest path tree (SPT) algorithm, wherein an optimization based on the minimum spanning tree algorithm provides typically better results than the shortest path tree algorithm because the shortest path algorithm optimizes for each node an individually optimized route, and therefore the tree is not optimized considering aggregation possibilities but aggregation is rather a coincidence as various shortest paths are only combined to a tree after the optimization.

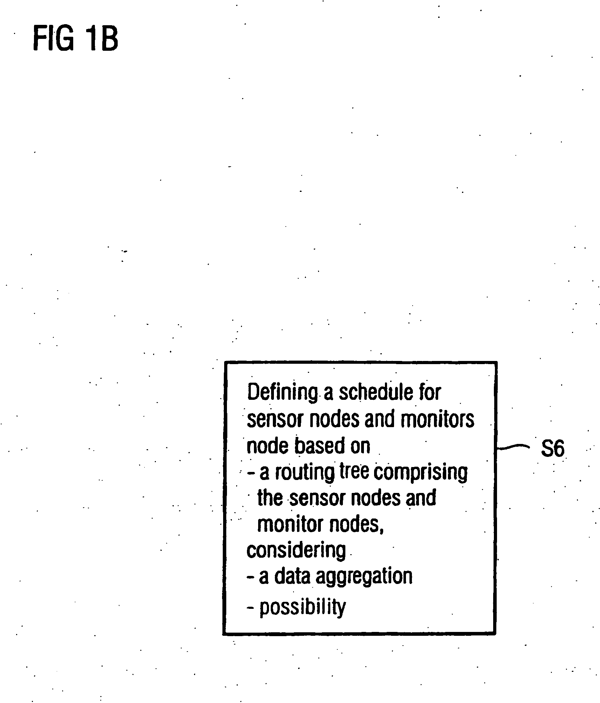

In step S5 said routes of said optimized routing tree are transmitted to the sensor nodes and the monitor node. Thus, each sensor node knows to which node, i.e. other sensor node, hop or monitor node, it has to transmit the measured or received data. Fig. 1B shows a chart illustrating the key aspects of the inventive method for controlling a transmission of data optimising the schedule for the transmission, summarised as step S6.

In step S6 for each of the sensor nodes and for the monitor node, all together forming a network, a schedule for transmitting or receiving data is defined, wherein the step of defining is based on a routing tree of said network and second considers a possibility for data aggregation of data being of a same data type.

Data aggregation can be based on a large variety of aggregation functions, for example, a minimum function, maximum function, an average function; SUM-functions or logical functions.

One example, where one could deploy wireless sensors is the "Louvre" or any other art museum, where sensors measure the humidity and temperature at a plurality of locations to protect the paintings.

In case the object of sensor network is to monitor whether the temperature is at any location below a certain threshold temperature or the humidity at any location above a certain threshold humidity, the sensor nodes would aggregate the temperature values according to a maximum function and the humidity values according to a minimum function. In another scenario, a sensor node would measure a temperature value and would already compare the measured temperature value with a temperature threshold value and would transmit a "0" in case the measured temperature value is below the temperature threshold value and would transmit a "1" in case the measured temperature value is above the temperature threshold value. In this case, the aggregation function could be a logical OR and would thus transmit a "1" as alarm indicator only if one of the sensors measured a temperature value with is above the temperature threshold. In both cases, additionally a node-identifier can be transmitted together with the measured value for localisation purposes.

In general the inventive method is independent of the aggregation function, as for being able to consider an aggregation only the constraints, for example, same data type, have to be known, and wherein data aggregation is considered such that in case a sensor receives according to said routing tree data of the same data type itself measures data of or receives two or more data of the same data from other sensor nodes, only a transmission of one data of said data type is scheduled for said aggregating node" and that before transmitting data of this particular data type all data of this particular data type have first to be received from the other sensor nodes within this branch at the aggregating node and to be aggregated by said aggregating node. The aggregating node can be a sensor node or a hop.

In the following a preferred embodiment of the present invention is discussed in more detail, wherein the preferred embodiment jointly optimizes the routing and the scheduling of a sensor network. In other words, the preferred embodiment is based on the steps S1 to S6 as shown in Figs. 1A and 1B. It should be noted that the details disclosed for the routing and the scheduling as explained based on the preferred embodiment are also applicable to embodiments of the inventive methods for controlling a routing or controlling of a scheduling separately.

To optimize energy consumption of wireless sensor networks with static typology or almost static typology a preferred embodiment of the present invention is based on an algorithm that jointly selects optimal routes and node schedules, so that routes are defined by a sequence of nodes with overlapping or parallel awake periods and aligned transmission (Tx) and reception (Rx) periods.

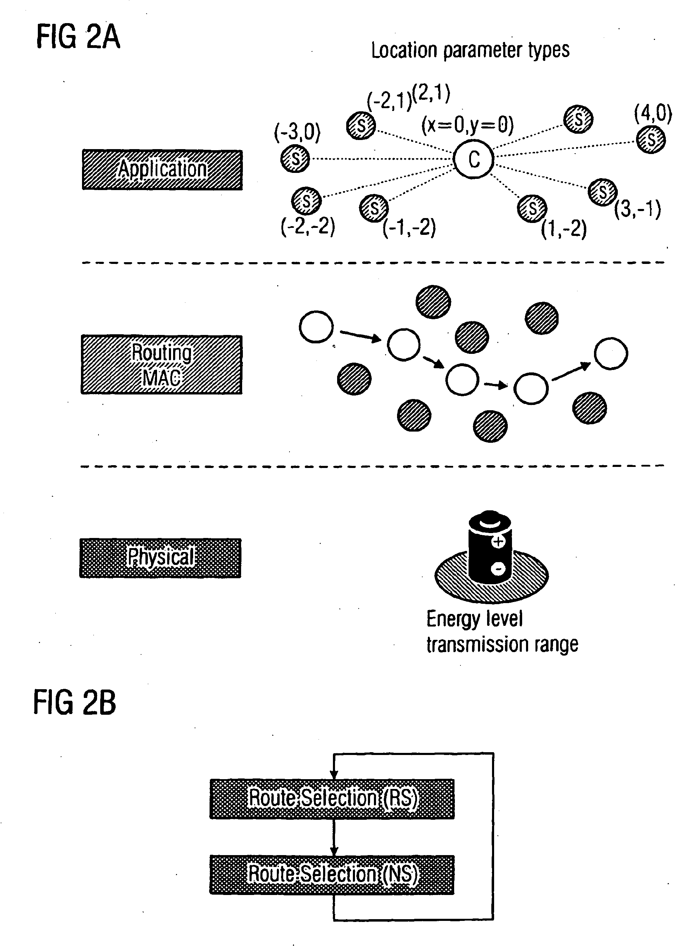

Fig. 2A visualizes a cross-layer network architecture, which includes a component that jointly finds optimal routes (Network Layer) and node schedules (MAC Layer) taking into account parameters, such as node location and data types from the Application Layer, and node energy level and transmission range from the Physical Layer.

The output of the algorithm is a schedule that defines in which slots nodes transmit and receive packets and implicitly the routes from the sensors to the Monitor. The algorithm is typically run within a node, which has enough energy and computation power. In most cases this node will be the Monitor, which must have high energy to gather all the data from the sensor and can obtain from nodes as side information also updates on their energy level or location. Once computed, the schedule is broadcasted to all the nodes in the WSN.

The schedule is computed in two steps: first route selection (RS), which identifies a route from each sensor node to the monitor, and second node scheduling (NS) which implements the routes identified in the previous step.

Maximising network life time requires not only minimising energy consumption per node but also maintaining good load balancing in the network. Load balancing is achieved by repeating the route selection/node scheduling (RS/NS) periodically so that routes are maintained through the nodes with highest level of energy. Furthermore repeating RS/NS periodically allows adapting the schedule to variations of network topology, e.g. due to node mobility. Fig. 2B shows the periodic repetition of route selection (RS) and node scheduling (NS).

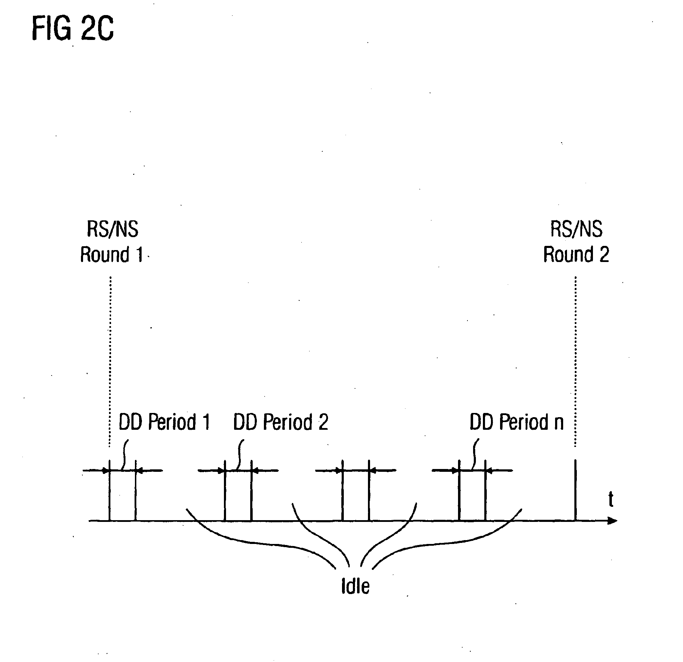

In the following the below definitions will be used: time slot, a interval during which a node can be scheduled to transmit or receive a packet; data delivery (DD) period, a time interval required for all the sensor nodes with a data packet to send at the beginning of the period to send the data packet to the monitor; Round, a time interval between two executions of the RS/NS algorithm. It includes several data delivery periods during which nodes follow the same schedule as shown in Fig. 2C.

Fig. 2C shows a route selection/node scheduling round with round R1 having n data delivery periods DD period 1, DD period 2, ..., DD period n and idle periods in between.

The scope of the applicability of the route selection/node scheduling approach is limited by the overhead due to: time-synchronisation of nodes and schedule computation and distribution. K. Romer, P. Blum, L. Meier, "Time Synchronization and Calibration in Wireless Sensor Networks", Handbook on Sensor Networks: Algorithms and Architectures. John Wiley. Sept 2005, in the following referred to as [5], provide an overview of techniques for synchronisation of wireless sensor nodes and compares them in terms of accuracy and overhead. Concerning the schedule computation distribution it is assumed that there is a node in the network which has sufficient energy to get a dynamic information from the nodes, e.g. their energy level or their location information, compute the node schedule and then distribute it to each node. In a clustered architecture, the scheduling task can be partitioned among cluster-heads, each computing the schedule of the nodes in its cluster.

The invention is of benefit, to, for example, the network operator operating the network because it allows increasing network life time of wireless sensor networks with static or almost static typologies and, thus, enables new services.

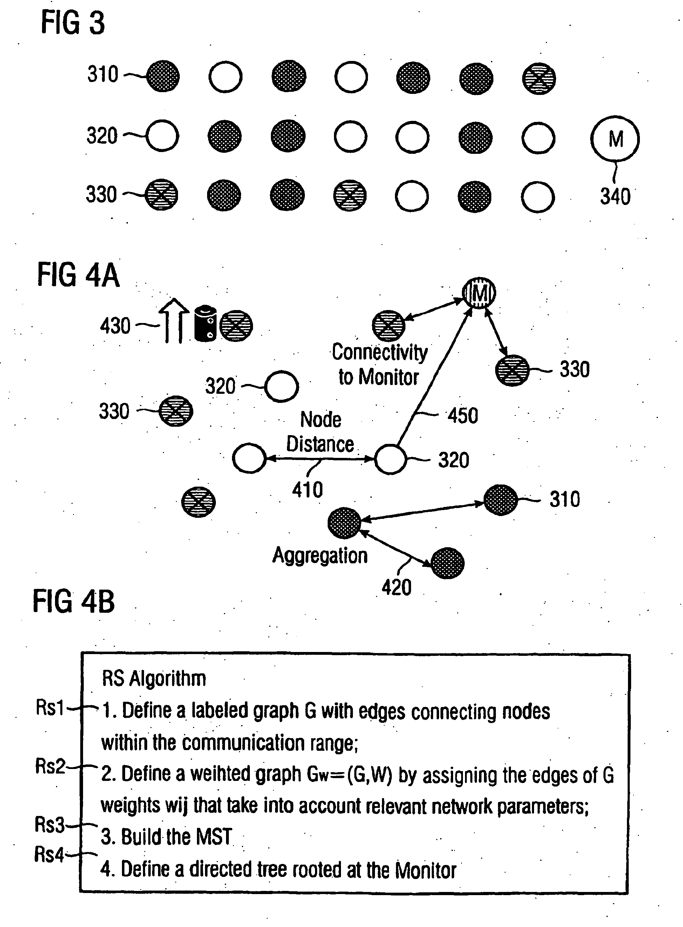

Preferred embodiments of the invention will be discussed in the following based on wireless sensor networks with the below characteristics. Most nodes include a sensor able to measure a parameter of the environment (data source). Nodes without sensors just work as hops, i.e. retransmit data received from other nodes. Each node has only one sensor measuring a specific parameter. In a WSN different nodes may have sensors measuring different parameters or data of a different data type (visualized in Fig. 3), wherein the dark circles 310 represent sensor nodes measuring a first type of data, wherein the white circles 320 represent sensor nodes which represent sensor nodes measuring a second type of data, wherein the circles 330 with the cross represent sensor nodes measuring a third type of data and wherein the circle with a "M" represents the monitoring node. These definitions for nodes measuring data of different data types will also be true for the following figures. Data measured by the same type of sensors can be aggregated. Parameters of the same type sensed in a neighborhood can be aggregated. No assumptions are made on the type of aggregation function that is applied (e.g. max, average...). Each sensor node aggregates the data it measures so that each time it is scheduled for transmission it has only a data unit. A data unit fits within a time slot, all them having the same duration. A node, which in the rest of the paper is called monitoring node, Monitor or sink, collects the data from all the sensors and has sufficient computational power to compute the schedule for the nodes in its cluster. Nodes are fixed during network operation or change location at a rate that is much smaller than the rate of application of RS/NS. Node location is assumed to be known by the Monitor a priori and with sufficient accuracy. Each node is in one of the following states: Transmit, Receive or Sleep. Nodes are synchronized in time. Techniques such as RBS allow to reach synchronization precision in the order of 10 microseconds, as described by K. Romer, P. Blum, L. Meier in "Time Synchronization and Calibration in Wireless Sensor Networks", Handbook on Sensor Networks: Algorithms and Architectures. John Wiley. Sept 2005, in the following referred to as [5]. The energy level of a node varies during operation and decreases due to computation and communication activities. Energy can be also gathered from external sources during operation. The Monitor has sufficient energy to perform its tasks.

The energy consumption of a node is computed using the following model based on T. Cormen, C. Leiserson, R. Rivest. Introduction to Algorithms. Mc Graw Hill, 1990, in the following referred to as [7]:

Receive: $N_{Rx}*E_1$, $E_1$= 135 nJ/ bit
Transmit: $N_{Tx}*(E_{21} + (d^n)*E_{22})$, $E_{21}$= 45 nJ/bit, $E_{22}$= 10 pJ/bit/m$^2$(n=2)
Sensing: $E_3$= 50 nJ/bit
Processing: $N_{agg}*E_4$, $E_4$= 10nJ/bit
Sleep state: $N_{sleep}*E_5$, $E_5$= 1.98 nJ/ bit,

where $N_{Rx}$ is the number of receiving time slots assigned to the node, $N_{Tx}$ is the number of transmitting time slots assigned to the node, $N_{agg}$ the number of aggregated streams, n the path loss factor, d the distance between nodes, $N_{sleep}$ the number of slots in sleep mode.

Route Selection finds energy-optimized routes from all source nodes to the Monitor by computing the Minimum Spanning Tree (MST) of a graph whose weights are defined taking into account: distance between nodes 410, type of parameters 420 being measured, energy level 430 of the nodes, energy consumption history, and connectivity 450 to the Monitor as shown in Fig. 4A. Energy consumption in the previous rounds is taken into account to achieve fair distribution of traffic load among nodes. Given a weighted graph, the MST computes the tree that has minimum weight and connects all the nodes of the network, as described in I. Akyildiz, W. Su, W. Snakrasubramaniam, E. Cayirci. A Survey on Sensor Networks. IEEE Communications, Aug. 2002, in the following referred to as [8]. Compared to Shortest Paths algorithms, MST favours the selection of low weight edges for best local connectivity of nodes to their neighbours, rather than minimizing the end-to-end distance of nodes from the Monitor. Hence, MST is especially suited to take advantage of opportunities of data aggregation.

Fig. 4B shows an exemplary inventive route selection and visualizes the route selection steps RS1 to RS4 of the route selection algorithm (RS). For step RS1 of defining a labelled graph, the following definitions hold: G is a tuple (N,E,P,EN), where N is the set of nodes, E the set of edges defined such that $\forall n_i, n_j \in N$, $e_{ij}$ e E if the distance between $n_i$ and $n_j$ $d_{ij}$ < TR, wherein TR is the maximum transmission range of the node (100 meters), P is a function that associates nodes with the type of parameter they measure (if $n_i$ is a hop $P(n_i)$=null, if $n_i$ is the Monitor $P(n_i)$=M), EN is a function that associates each node with its energy level.

Step RS2 defines the weighted graph with weights wij for each edge between the nodes i and j based on the following function:

$$\forall\ e_{ij}\ \in\ E,\ wij\ =\ K_{EL}*EL\ +\ K_{EC}*EC\ +\ K_{ND}*ND\ +\ K_{MD}**MD+\ K_{AG}*AG,$$

wherein all these parameters assume normalized values between 0 and 1 and wherein $K_{EL}$, $K_{EC}$, $K_{ND}$, $K_{MD}$, and $K_{AG}$

are constants that determine the relative weight of each parameter, in the following also referred to as relative weights.

Energy Level (EL) captures the energy level of the nodes and is defined as

    1. if $EL_i >= \overline{EL}$ & $EL_j >= \overline{EL}$, then $EL_{ij} = 0$
    2. if $EL_i > \overline{EL}$ || $EL_j > \overline{EL}$, then $EL_{ij} = 0.5$
    3. otherwise $EL_{ij} = 1$,

and $\overline{EL}$ is the average energy of the network nodes.

Energy Consumption (EC) captures the energy consumed by a node in the previous round:

    1. if $EC_i <= \overline{EC}$ & $EC_j <= \overline{EC}$, then $EC_{ij} = 0$
    2. if $EC_i < \overline{EC}$ || $EC_j < \overline{EC}$, then $EC_{ij} = 0.5$
    3. otherwise $EC_{ij} = 1$,

where $\overline{EC}$ is the average energy consumed by the network nodes in the previous round.

Node Distance (ND) is the distance between node i and node j normalized by TR, i.e. $ND_{ij} = d_{ij}$ /TR.

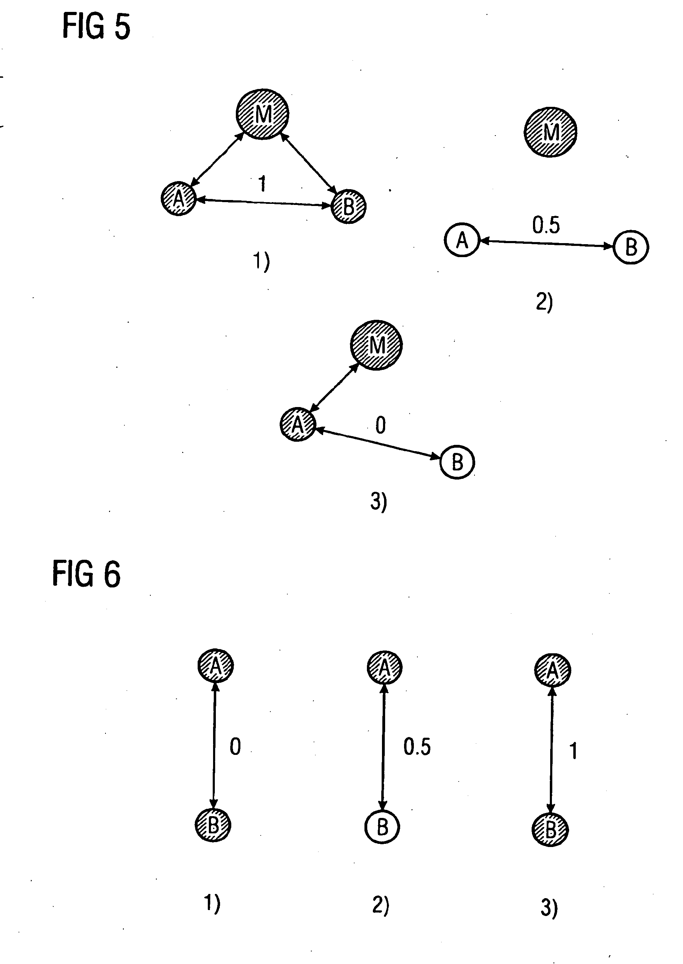

Monitor Distance (MD) captures the distance of the nodes from the Monitor. This factor is used to encourage communication over direct links to the monitor whenever possible or communication over nodes that are directly connected to the monitor (see Fig. 5)

    1. if $d_{iM} < TR$ & $d_{jM} < TR$, then $MD_{ij} = 1$
    2. if $d_{iM} > TR$ & $d_{jM} > TR$, then $MD_{ij} = 0.5$
    3. otherwise $MD_{ij} = 0$.

Fig. 5 shows these three exemplary monitor distance cases: 1) sensor node A and sensor node B are within the range of the monitor node M, 2) neither sensor node A nor sensor node B are within the range of monitor node M, 3) only sensor node A is within range of the monitor node M. Fig. 5 shows furthermore the respective monitor distance (MD) values for the three cases.

Aggregation (AG) captures the possibility to locally aggregate packets carrying the same type of parameter and favors the selection of edges connecting nodes that measure the same parameter (see Fig. 6)

    1. if $n_i$ is the monitor or $P(n_i)=P(n_j)$, $AG_{ij}=0$.
    2. if $P(n_i)=null$ or $P(n_j)=null$, $AG_{ij}=0.5$
    3. if $P(n_i)\neq P(n_j)$ & $P(n_i)\neq null$ & $P(n_j)\neq null$, $AG_{ij}=1$

Fig. 6 shows these three exemplary aggregation cases: 1) Sensor node A and sensor node B measure the same parameters or data of the same data type, 2)Node B is a hop, 3) sensor node A and sensor node B measure different parameters. Fig. 6 shows furthermore the aggregation (AG) values for the respective cases.

The algorithm to compute the minimum spanning tree (MST) in step RS3 is described in "T. Cormen, C. Leiserson, R. Rivest: Introduction to Algorithms. Mc Graw Hill, 1990", in the following referred to as [8].

Given the minimum-spanning tree (MST), derived from $G_w$ in step RS4, the directed tree rooted at the monitor node is derived. Each node, i.e. hop and/or sensor node, is assigned a depth, which is defined as the distance in nodes from the root.

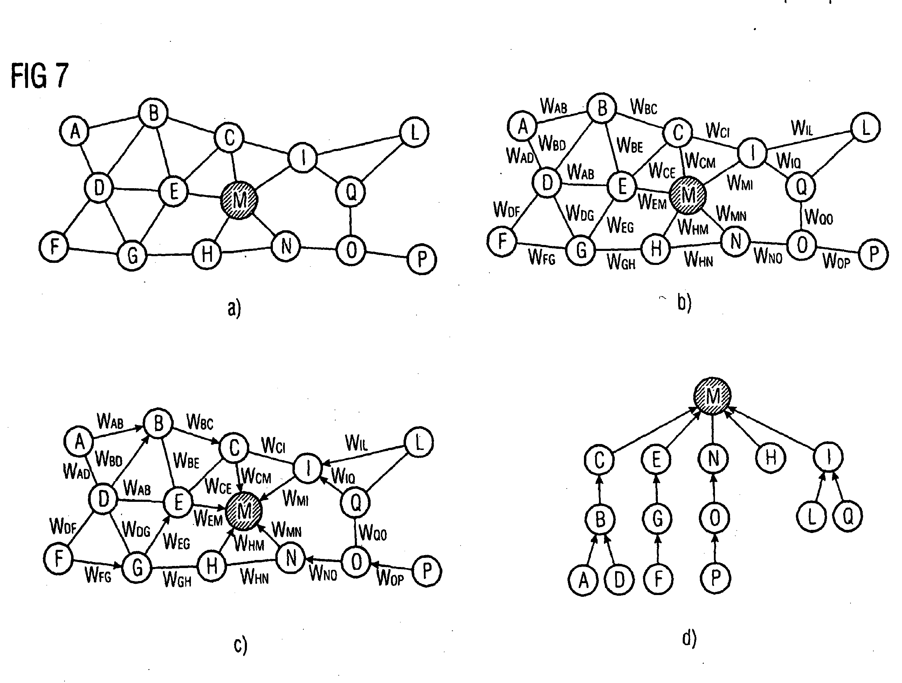

Fig. 7 shows exemplary graphs and a resulting tree illustrating the steps of the embodiment of the inventive method for controlling the routing according tio Fig. 4B. Fig. 7a) shows the labeled graph G after graph definition with edges connecting nodes A to Q, with M being the monitoring node (step RS1). Fig. 7b) shows the weighted graph $G_w$ after weight assignment with weights wij assigned to the edges of graph G (step RS2). Fig. 7c) shows the built or selected minimum-spanning tree (bold arrows) after MST computation (step RS3). Fig. 7d) shows the directed tree after convergecast tree definition with the different branches connecting the sensor nodes A to Q to the monitoring node M, the monitoring node M being the root of the tree (step RS4).

In the following, the node scheduling (NS) will be discussed in more detail. Given the tree computed by the route selection (RS) and knowing the type of data measured by the sensor nodes, the node scheduling (NS) defines, for example, the time slots when nodes transmit, receive, or are in sleep mode assuming that all the nodes are synchronized in time.

The algorithm first traverses the nodes of the tree or branches from the leaves, i.e. sensor nodes A, D, F, P, H, L, and Q, to the root M, and determines the number of transmit and receive slots to be assigned to each node, taking into account if nodes include sensors and data can be aggregated. Then, it assigns time slots to nodes taking into account node interference and minimizing the communication delay from the source nodes to the monitoring node. If a node receives packets carrying the same type of parameter from more than one of its children, or receives packets carrying the same type as itself measures, it applies an aggregation function (e.g. average, max, min) to the data packets and transmits the result in one time slot.

Time slots are assigned to nodes that have data to send starting from the nodes with higher depth. When a node is assigned a time slot for transmission, its transmission timeslot counter nTx and the reception timeslot counter nRx of the receiving node are decreased by one unit. The same timeslot can be assigned to multiple nodes as far as they do not interfere. When the algorithm can choose among several nodes that can be scheduled during a time slot, it selects the node that has been holding the data in its buffer for a longer time (maximum buffer delay).

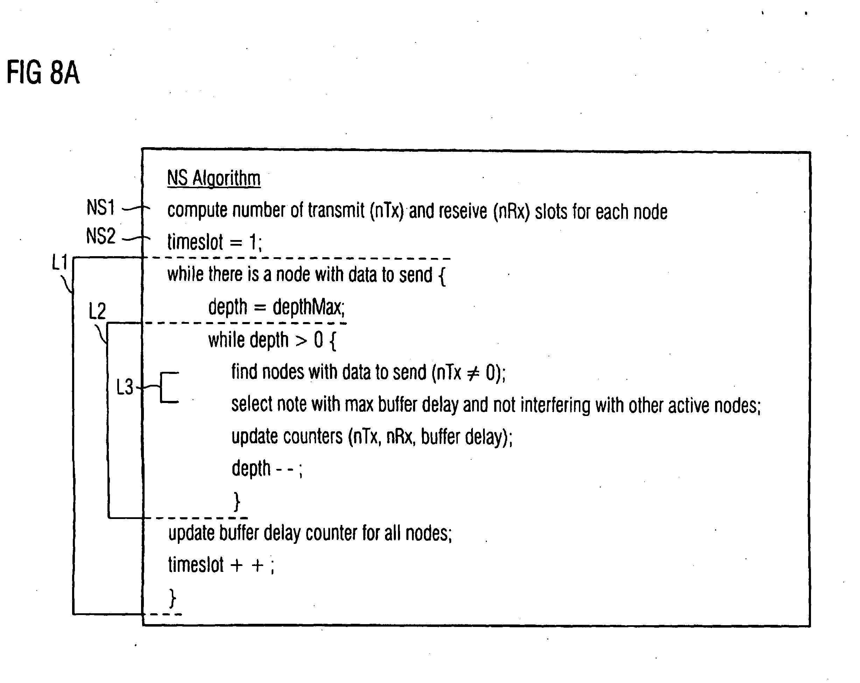

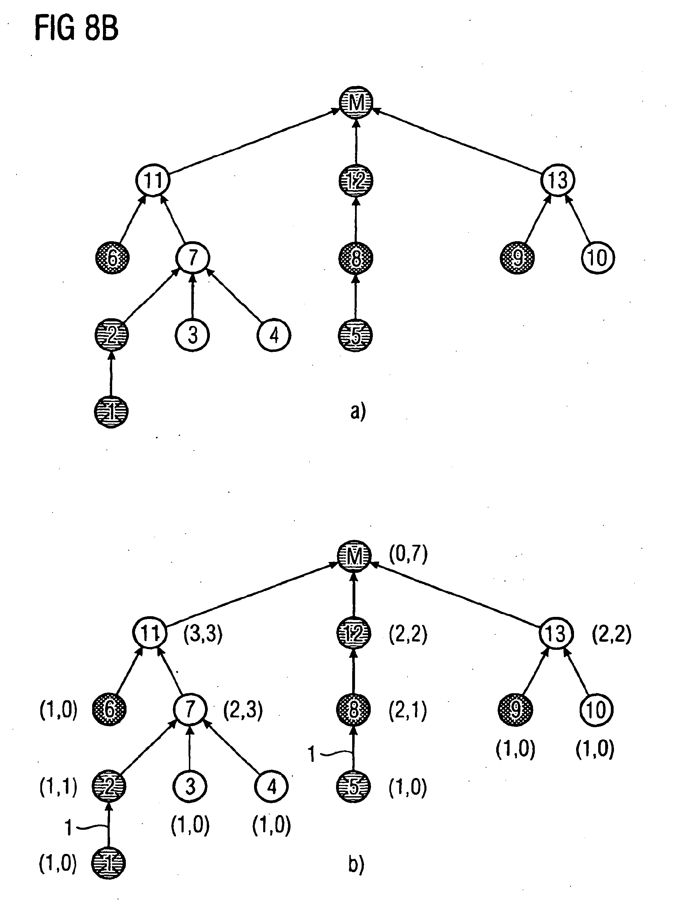

Fig. 8 shows an exemplary node-scheduling (NS) algorithm. In step NS1, the algorithm computes the number of transmit (nTx) and receive (nRx) slots for each node. In step NS2, the time slot value "timeslot" is initialized, in Fig. 8 initialized with a value "1". In the following steps, time slots starting from time slot 1 are assigned to the different nodes, i.e. sensor nodes, hops, and/or monitoring node (iteratively assigned), starting with a first loop L1, which is repeated until there is no node left which has data to send, and in which after each iteration the buffer delay counter for all nodes is updated and the time slot value is incremented. Within the first loop L1, a second loop L2 is performed, which starts at the leaves, i.e. initializes a "depth"-value with "depthMax", and iteratively checks for nodes, which have data to send ($nTx \neq 0$) and which at the end of each iteration updates the transmit slot and receive slot counters (nTx, nRx) and the buffer delay counter, and the depth value is decremented. That node is selected which has a maximum buffer delay and which does not interfere with other active nodes, active at the same time slot. For this embodiment with two loops L1 and L2, each time slot is at maximum assigned to only one transmitting node of the same depth. Alternatively, a third loop L3 can be inserted, which iteratively also checks nodes with the same depth but prioritizes the assignment of time slots based on the individual buffer delays.

The decision whether a node interferes with another node can be based on signal-to-noise ratio (SNR) measurements or based on respective tables, for example, in case of static network topologies, where all nodes have a fixed location, so that said table can be once prepared containing the interference decision parameters for all scenarios. Furthermore, the decision concerning interference could also be based on the distance between possibly interfering nodes or links, wherein the decision whether the nodes or links interfere with each other is based on a distance threshold.

In the following, the node scheduling algorithm according to Fig. 8A will be explained based on an example tree as shown in Fig. 8B. Fig. 8B.a) shows a tree with a monitoring node M, and sensor nodes measuring data of different data types, wherein sensor nodes 6, 8, and 9 measure data of a first data type, wherein nodes 3, 4, 7, 10, 11, and 13 measure data of a second data type, and wherein nodes 1, 2, 5, and 12 measure data of third data type. The first step consists of computing how many transmit (nTx) and receive (nRx) slots are required to each node given the type of data carried by the packets and the opportunities or possibilities for aggregation. As a result, the tree shown in Fig. 8B.b) is derived, depicting for each node (on the left side the number of transmit slots nTx, and on the right side the number of receive slots, i.e. (nTx, nRx). Then, slots are assigned to nodes for transmitting and receiving. At the beginning, nodes 1, 3, 4, 5, 6, 8, 9, 10 have data to send, starting from depth = depth Max = 4 node 1 is assigned timeslot 1 for transmission and node 2 is assigned timeslot 1 for reception, and the corresponding (nTx, nRx) counters are updated. The assignment of time slot 1 is shown in square brackets "[1]" in Fig. 8B.b). Then, the algorithm moves to depth 3 and selects a node that can transmit without interfering with the nodes 1 and 2, e.g. node 5. The assignment of timeslot 1 to the transmission link between node 5 and node 8 is also shown in [1] in Fig. 8B.b). The algorithm continues until nTx = nRx = 0 is true for all the network nodes.

In the following, results of a simulation of the inventive method are described and analyzed.

The RS/NS algorithm selects the node schedule taking into account Energy Level and Consumption, Node Distance, Monitor Distance and Aggregation. Running C++ simulations, the relative importance of these parameters has been evaluated to identify the optimal value assignment of the K's factors. The simulations concern a network covering a square area of 300x300 meters with the monitor placed in the center. Nodes start operation with a budget of 0.1 J.

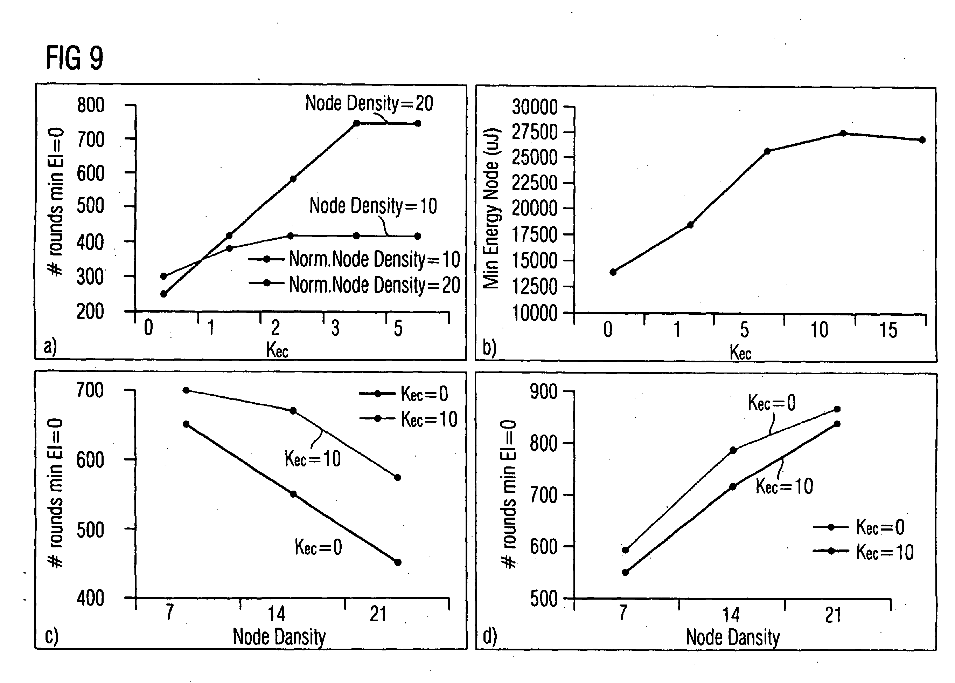

The role of Energy Level (EL) and Energy Consumption (EC) in the maximization of the network lifetime is essential. Fig. 9a visualizes the relationship between the $K_{e1}$ factor and the number of rounds before the first node in the network reaches null energy level for different values of normalized node density. The number of rounds grows with $K_{e1}$, until $K_{e1}=5$, and is greater in the case of higher node density because different paths to the monitor can be established and the load can be split among multiple nodes in proximity to the Monitor. However, when EL is not considered ($K_{e1}=0$), the routes are not updated at the end of each round and the network with greater node density depletes few nodes sooner, as they must hop a larger amount of data.

It can also be seen from Fig. 9a) that for relative weights being in a range of 3 to 5, the number of rounds before the first node in a network reaches 0 energy level, is a factor 7 higher for a doubled node density of 20 compared to a node density of 10.

Fig. 9b shows how the minimum energy node (after 500 rounds and for a network of 28 nodes) varies with the factor $K_{ec}$: for $K_{ec}<10$ it increases when $K_{ec}$ increases, for $K_{ec}>10$, it decreases because EC dominates other parameters.

The nodes that reach 0 energy sooner are those located near the monitoring node, because they must hop data sensed by nodes at higher depth in the tree. Figs. 9c and 9d visualize how the number of rounds before the first node in the network reaches 0 energy level varies with the normalized node density for the case when $K_{md}$ = 2 and $K_{md}$ = 0, respectively. Fig. 9c shows that as the node density increases, nodes close to the monitor have to send more data and reach 0 energy sooner. Instead, Fig. 9d shows that if the MD factor is not considered ($K_{md}$ = 0), the closest nodes to the monitor are not favored any more and the algorithm finds alternative routes to the monitor.

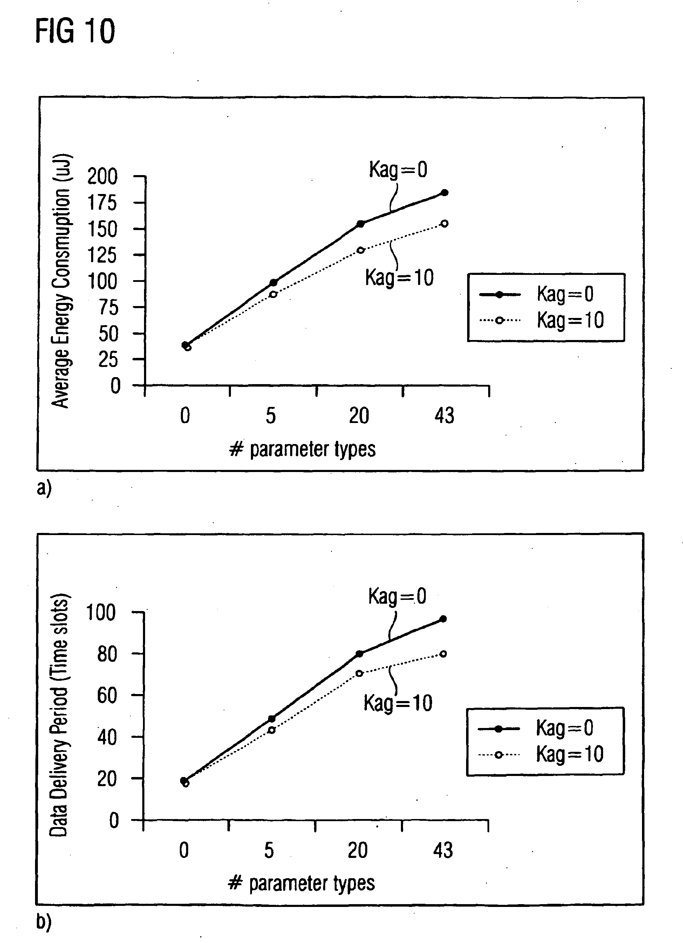

Aggregation is an important parameter not only to minimize the average energy consumption but also to reduce the duration of a DD period. Fig. 10a compares the average consumption in the cases $K_{ag}$=0 and $K_{ag}$=10. The average energy consumption is smaller when AG is considered, and, as expected, decreases when the overall number of sensing parameters in the network gets smaller. Similarly, increasing the weight of AG reduces the DD period as shown in Fig. 10b. Notice that the difference of the curves corresponding to $K_{ag}$=0 and $K_{ag}$=10 grows with the number of the sensed parameters, because, as the number of different sensing parameters increases, considering AG favors the task of identifying links between the fewer pairs of nodes sensing the same parameter. Fig. 10b shows that the DD period is reduced due to data aggregation when $K_{ag}$=10 and the number of parameters gets smaller.

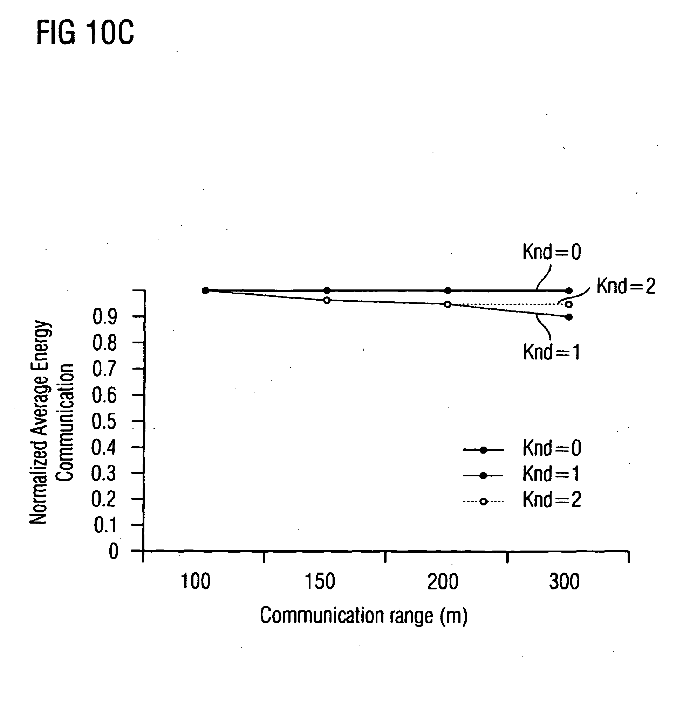

Node distance (ND) takes into account that communication over short distance links is more convenient from an energy perspective. This is especially true for higher values of the communication range, which enable links of a longer distance. In this case, considering the ND factor allows a better optimization as shown in Fig. 10c.

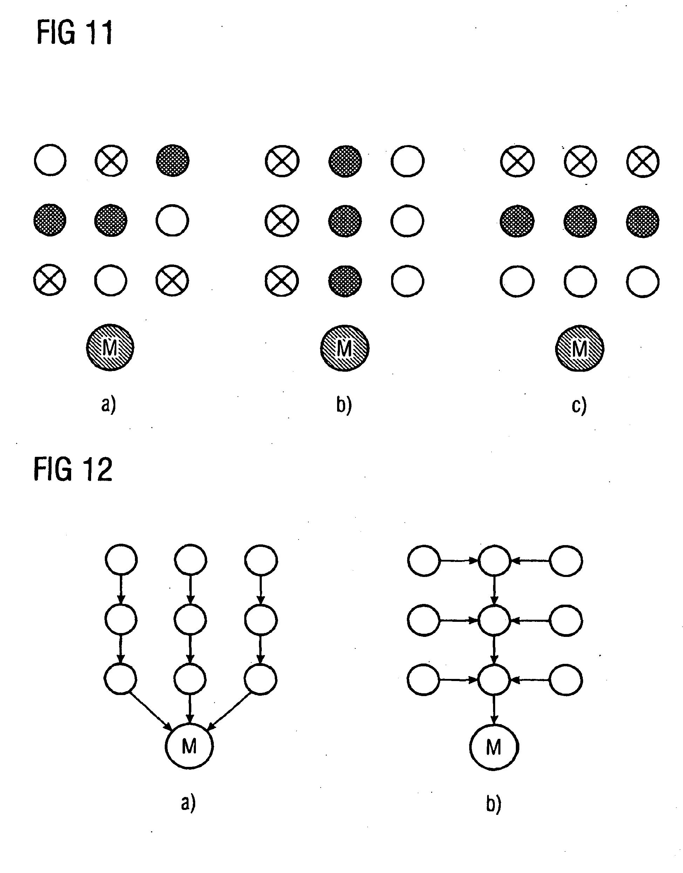

Next, the inventive approach to schedule networks is applied to a scenario where nodes are regularly spaced in a thread-like topology. Three cases, as visualized in Fig. 11 are considered, where nodes measuring three different types of data are shown. In Fig. 11a, there is no specific ordering, in Fig. 11b, nodes sensing the same parameters or data of the same data type are in the same column, and in Fig. 11c nodes sensing the same parameters are in the same row. Furthermore, two types of routes, as visualized in Fig. 12 are considered, for convenience the routes according to Fig. 12a is referred to as vertical route and routes according to Fig. 12b are referred to as horizontal routes.

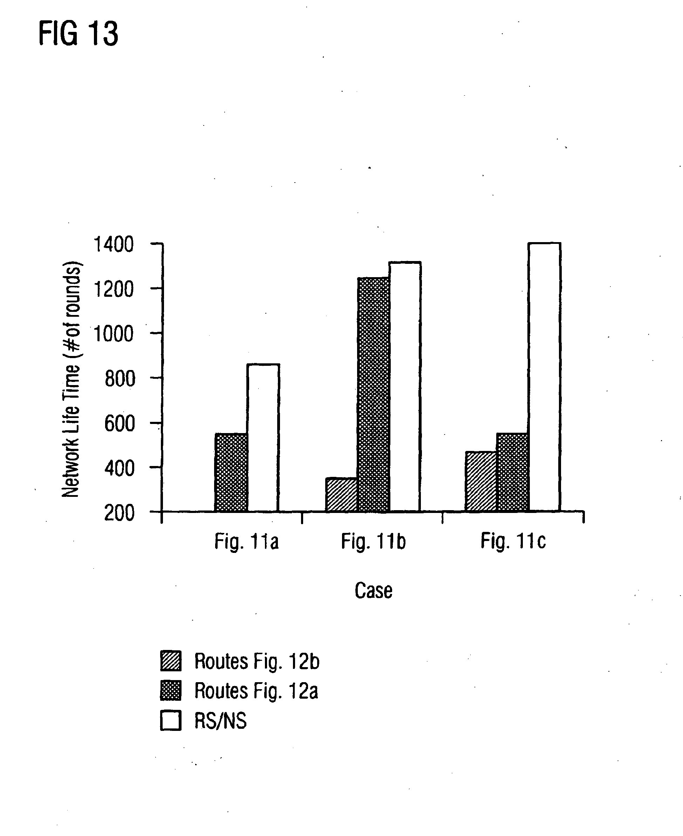

The inventive method for controlling a transmission based on the route selection/node scheduling (RS/NS) approach has been compared with a static assignment of horizontal and vertical routes as shown in Figs. 12a and 12b. In all cases, RS/NS allows improving the lifetime of the first node that reaches 0 energy, because it takes into account dynamic changes of energy levels and periodically computes different routes to avoid energy depletion of a few nodes. Fig. 13 shows that the advantage of using RS/NS is clear, except in the case of parameter type distribution shown in Fig. 11b, where the aggregation factor (AG) makes also RS/NS find the vertical routes. In the case of Fig. 11c distribution, statically defined horizontal routes allow a better lifetime than in the case of Figs. 11a and 11b due to aggregation, but do not take into account variations of energy levels and therefore have a shorter lifetime than RS/NS. RS/NS takes into account both aggregation and dynamic variations of energy, and therefore allows the network to achieve a good load balancing and extended service life.

The problem addressed is how to jointly optimize Network and MAC (Medium Access Layer) Layers to maximize network lifetime by taking into account relevant parameters from the upper and lower layers, such as the type of transmitted data, location of nodes and the current energy level of the nodes.

Although the preferred embodiment of the present invention was described for networks with sensors measuring only one specific parameter, it should be noted that the present invention can also be applied to sensor networks where the sensor nodes measure more than one data type or parameter, in this case, for example, only the number of transmission slots nTx and receiving slots nRx has to be adapted accordingly.

Although aggregation was only applied to data of the same data type in the description, it should be noted that depending on the requirements of a network operator and the information, which is of interest, an aggregation may also be applied to data of different types of data. In this case, this kind of data of different data types, which can be aggregated according to a specific aggregation function is to be understood as "data of the same data type". Referring to the afore-mentioned sample of the Louvre, senses with a node or different nodes may measure the humidity and the temperature at different locations and sensor nodes might already compare these measured values with a threshold and aggregation functions may aggregate the alarms for "too low humidity" and "too high temperature" into one alarm.

Furthermore, the present invention can be extended to not only use time slots within one frequency band, but also to use time slots in different frequency bands, thus allowing a parallel transmission in different frequency bands on the same time slot. In this way, the data delivery period can be further reduced. The inventive scheduling method is easily adapted by, for example, adding another loop for each frequency band.

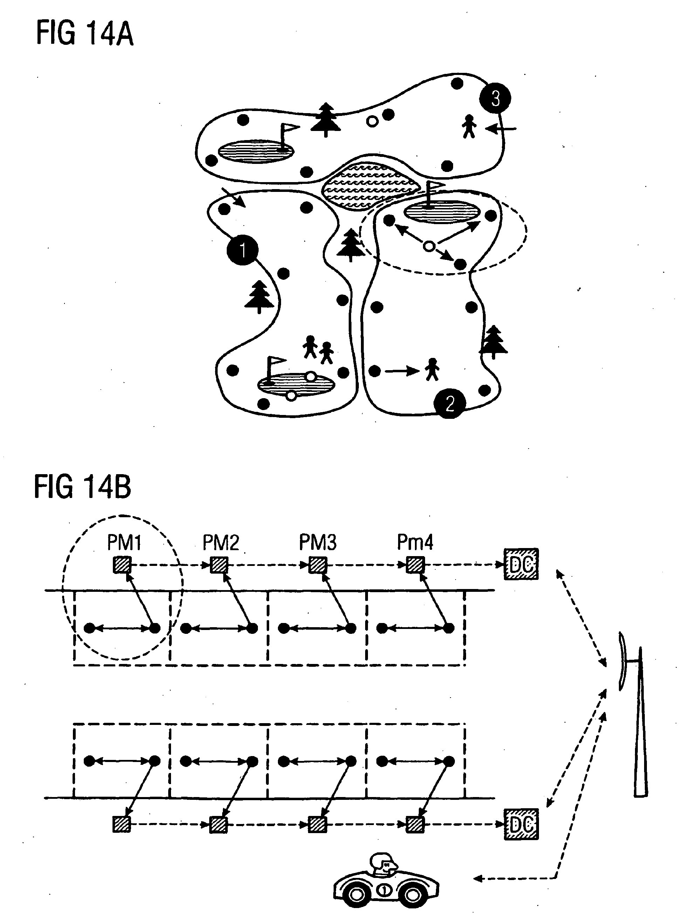

In the following, further use cases for the invention shall be discussed based on Figs. 14A, and 14B. Fig. 14A shows a golf course, wherein wireless sensor networks can be used for localizing golf balls, for visualization of course maps, for safety warning, environmental monitoring, profiles and game advisory or course schedule management.

Fig. 14B shows a scenario for a parking lot, wherein a wireless sensor network could be used for querying the availability of parking lots, giving directions to the selected lot, for payment of a parking lot, for ticket management, or for reservation of parking lots.

To summarize the afore-mentioned, Wireless Sensor Networks (WSNs) are composed of a large number of

# EP 1 835 668 B1

nodes with RF (Radio Frequency) communication capabilities that are deeply embedded in the environment and have very limited resources. Energy is the most critical resource because WSN nodes are usually powered by small batteries. To maximize network lifetime it is essential that protocols are highly optimized to reduce energy consumption and are adaptive to variations of external parameters. The invention provides a method and an apparatus that optimizes communication protocols between nodes in a wireless network to minimize the energy consumption. It defines routes and/or node schedules taking into account parameters such as the level of the energy of the nodes, possibilities for an aggregation based on the type of data being transmitted and the location of the nodes. It can be used for the optimization of network protocols for ubiquituous computing application with static or near-static network topologies. In a preferred embodiment it provides an energy-efficient routing and MAC protocol for wireless sensor networks with static topology. Applications are environment monitoring, home networking, or localization applications. The invention is beneficial in the way that it maximizes the lifetime of wireless sensor networks and enables new services.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. Method for controlling a transmission of data from a plurality of sensor nodes (310, 320, 330) to a monitor node (340) of a network, comprising:

   generating (S1, RS1) a graph for said sensor nodes and said monitor node, wherein edges of said graph connect pairs of sensor nodes to each other, or connect a sensor node to said monitor node based on a distance between respective nodes;
   obtaining (S2) for each of said sensor nodes an associated energy level (430) or energy consumption;
   assigning (S3, RS2) a weight to each edge of said graph depending on said energy level (430) or said energy consumption and a possibility for data aggregation (420) of data being of a same data type, wherein a higher energy level or a lower energy consumption of a sensor node and a higher possibility for data aggregation result in a weight increasing a probability of selecting an edge connected to said sensor node in a step of defining a routing tree;
   defining (S4, RS3, RS4) a routing tree including for each of said sensor nodes a route for transmitting said data from said sensor node to said monitor node, such that an overall weight of said routing tree is minimized if a lower weighting indicates a higher probability of selection or maximized if a higher weighting indicates a higher probability of selection; and
   assigning (S5) said routes to said plurality of sensor nodes and to said monitor node.

2. Method according to claim 1, comprising additionally the following step:

   defining (S6) for each of said plurality of sensor nodes (310, 320, 330) and for said monitor node (340) a schedule for transmitting or receiving said data,

   wherein the step of defining is based on said routing tree and considers said data aggregation.

3. Method according to claim 1 or 2, wherein said sensor nodes (310, 320, 330) are operative to measure, receive or transmit data of a plurality of different data types.

4. Method according to one of the claims 1 to 3, wherein said step (S3, RS2) of assigning a weight further depends on said distance (410) between respective sensor nodes and depends on said distance (450) between a sensor node and said monitor node, wherein a higher distance results in a lower probability of selecting an edge defined by said respective sensor nodes or said sensor node and said monitor node.

5. Method according to one of the preceding claims, wherein for said step (S3, RS2) of assigning a weight, a parameter said step depends on is weighted relative to other parameters through a relative weight.

6. Method according to claim 5, wherein said step (RS2) of assigning a weight is based on a following formula:

$$\forall \ e_{ij} \in E,$$

$$wij = K_{EL}*EL + K_{EC}*EC + K_{ND}*ND + K_{MD}**MD + K_{AG}*AG,$$

wherein E is a set of edges of the graph and wherein $e_{ij}$ is a specific edge of the said set E of edges, wherein wij is said weight of an edge connecting a node with index i to another node with index j, wherein i, j, = 1,..., N or i, j = M, wherein N is the number of said plurality of sensor nodes and wherein M is the index of said monitor node, wherein EL is said energy level and wherein $K_{EL}$ is a relative weight assigned to said energy level EL, wherein EC is said energy consumption and wherein $K_{EC}$ is a relative weight assigned to said energy consumption EC, wherein ND is said node distance and wherein $K_{ND}$ is a relative weight assigned to said node distance ND, wherein MD is said monitor distance, and wherein $K_{MD}$ is a relative weight assigned to said monitor distance MD, and wherein AG is said aggregation possibility, and wherein $K_{AG}$ is a relative weight assigned to said aggregation possibility AG, and wherein said energy level EL, said energy consumption EC, said node distance ND, said monitor distance MD and said aggregation possibility AG are normalized values between 0 and 1.

7. Method according to one of the claims 1 to 6, wherein said step (RS3) of defining a routing tree is performed based on a minimum spanning tree (MST) algorithm.

8. Method according to one of the claims 2 to 7, wherein said step (S6) of defining a schedule considers said data aggregation such that in case said sensor receives according to said routing tree data of the same data type itself measures or receives two or more data of the same data, said data of the same data type are aggregated into a single transmission.

9. Method according to one of the claims 2 to 8, wherein said step of defining (S6) a schedule comprises the following steps:

computing (NS1) according to said routing tree for each of said sensor nodes and said monitor node, a node specific number (nRx) of data to be received and a node specific number (nTx) of data to be transmitted for a transmission of all data from said plurality of sensor nodes to said monitor node, and assigning to each of said sensor nodes and to said monitor node a continuous time interval or a plurality of time intervals for receiving said data based on said node specific number of data to be received and a continuous time interval or a plurality of time intervals for transmitting said data based on said node specific number of data to be transmitted, wherein different transmission links can be assigned overlapping time intervals according to a given algorithm in case they do not interfere with each other, and wherein a transmission link is defined by a sensor node transmitting data and by a corresponding sensor node or monitor node receiving said data.

10. Method according to claim 9, wherein said time interval is a time slot of fixed length and wherein one data can be transmitted over one transmission link per time slot, and wherein said step (S6) of defining a schedule is based on assigning a depth to each of said sensor nodes, said assigned depth being defined as a distance in sensor nodes from said monitoring node according to said routing tree; and wherein said step (NS1) of computing is implemented such that it iteratively assigns said time slots to said sensor nodes and said monitor node, starting from sensor nodes with a maximum depth and proceeding to sensor nodes with a minimum depth, wherein same time slots are assigned to sensor nodes of the same or lower depth belonging to other transmission links in case said other transmission links do not interfere with transmission links, said actual time slot has already been allocated to.

11. Method according to claim 10, wherein for said allocation of time slots to said sensor nodes in case two or more sensor nodes have the same depth said time slot is allocated to a sensor node with a maximum buffer delay.

12. Computer program having a program code for performing a method in accordance with one of the claims 1 to 11, when the program runs on a computer.

13. Apparatus for controlling a transmission of data from a plurality of sensor nodes to a monitor node of a network, comprising:

means for generating a graph for said sensor nodes and said monitor node, wherein edges of said graph connect pairs of sensor nodes to each other, or connect a sensor node to said monitor node based on a distance between respective nodes;

means for obtaining for each of said sensor nodes an associated energy level or energy consumption;

means for assigning a weight to each edge of said graph depending on said energy level or said energy consumption and a possibility for data aggregation of data being of a same data type, wherein a higher energy level or a lower energy consumption of a sensor node and a higher possibility for data aggregation result in a weight increasing a probability of selecting an edge connected to said sensor node in a step of defining a routing tree;

means for defining a routing tree including for each of said sensor nodes a route for transmitting said data from said sensor node to said monitor node, such that an overall weight of said routing tree is minimized if a lower weighting indicates a higher probability of selection or maximized if a higher weighting indicates a higher probability of selection; and

means for assigning said routes to said plurality of sensor nodes and to said monitor node.

## Patentansprüche

1. Verfahren zum Steuern einer Sendung von Daten aus einer Mehrzahl von Sensorknoten (310, 320, 330) an einen Überwachungsknoten (340) eines Netzwerks, das folgende Schritte aufweist:

Erzeugen (S1, RS1) eines Graphen für die Sensorknoten und den Überwachungsknoten, wobei Kanten des Graphen Paare von Sensorknoten miteinander verbinden oder einen Sensorknoten mit dem Überwachungsknoten verbinden, basierend auf einem Abstand zwischen jeweiligen Knoten;

Erhalten (S2) eines zugeordneten Energiepegels (430) oder eines Energieverbrauchs für jeden der Sensorknoten;

Zuweisen (S3, RS2) einer Gewichtung zu jeder Kante des Graphen abhängig von dem Energiepegel (430) oder dem Energieverbrauch und einer Möglichkeit für eine Datenaggregation (420) von Daten, die von einem gleichen Datentyp sind, wobei ein höherer Energiepegel oder ein niedrigerer Energieverbrauch eines Sensorknotens und eine höhere Möglichkeit für eine Datenaggregation in einer Gewichtung resultieren, die bei einem Schritt eines Definierens eines Routing-Baumes eine Wahrscheinlichkeit eines Auswählens einer Kante erhöht, die mit dem Sensorknoten verbunden ist;

Definieren (S4, RS3, RS4) eines Routing-Baumes, der für jeden der Sensorknoten eine Route zum Senden der Daten aus dem Sensorknoten zu dem Überwachungsknoten umfasst, derart, dass eine Gesamtgewichtung des Routing-Baumes minimiert wird, wenn eine niedrigere Wichtung eine höhere Wahrscheinlichkeit einer Auswahl anzeigt, oder maximiert, wenn eine höhere Wichtung eine höhere Wahrscheinlichkeit einer Auswahl anzeigt; und

Zuweisen (S5) der Routen zu der Mehrzahl von Sensorknoten und zu dem Überwachungsknoten.

2. Verfahren gemäß Anspruch 1, das zusätzlich folgenden Schritt aufweist:

Definieren (S6) eines Zeitplans zum Senden oder Empfangen der Daten für jeden der Mehrzahl der Sensorknoten (310, 320, 330) und für den Überwachungsknoten (340), wobei der Schritt des Definierens auf dem Routing-Baum basiert und die Datenaggregation berücksichtigt.

3. Verfahren gemäß Anspruch 1 oder 2, bei dem die Sensorknoten (310, 320, 330) wirksam sind, um Daten einer Mehrzahl von unterschiedlichen Datentypen zu messen, zu empfangen oder zu senden.

4. Verfahren gemäß einem der Ansprüche 1 bis 3, bei dem der Schritt (S3, RS2) des Zuweisens einer Gewichtung ferner von dem Abstand (410) zwischen jeweiligen Sensorknoten abhängt und von dem Abstand (450) zwischen einem Sensorknoten und dem Überwachungsknoten abhängt, wobei ein höherer Abstand in einer niedrigeren Wahrscheinlichkeit eines Auswählens einer Kante resultiert, die durch die jeweiligen Sensorknoten oder den Sensorknoten und den Überwachungsknoten definiert wird.

5. Verfahren gemäß einem der vorhergehenden Ansprüche, bei dem für den Schritt (S3, RS2) des Zuweisens einer Gewichtung ein Parameter, von dem der Schritt abhängt, relativ zu anderen Parametern durch eine relative Gewichtung gewichtet wird.

6. Verfahren gemäß Anspruch 5, bei dem der Schritt (RS2) des Zuweisens einer Gewichtung auf einer folgenden Formel basiert:

$$\forall\ e_{ij}\ \in\ E,$$

$$wij\ =\ K_{EL}*EL\ +\ K_{EC}*EC\ +\ K_{ND}*ND\ +\ K_{MD}**MD\ +\ K_{AG}*AG,$$

wobei E ein Satz von Kanten des Graphen ist und wobei $e_{ij}$ eine spezifische Kante des Satzes E von Kanten ist, wobei wij die Gewichtung einer Kante ist, die einen Knoten mit einem Index i mit einem anderen Knoten mit einem Index j verbindet, wobei i, j = 1,..., N oder i, j = M, wobei N die Anzahl der Mehrzahl von Sensorknoten ist und wobei M der Index des Überwachungsknotens ist, wobei EL der Energiepegel ist und wobei $K_{EL}$ eine relative Gewichtung ist, die dem Energiepegel EL zugewiesen ist, wobei EC der Energieverbrauch ist und wobei $K_{EC}$ eine relative Gewichtung ist, die dem Energieverbrauch EC zugewiesen ist, wobei ND der Knotenabstand ist und wobei $K_{ND}$ eine relative Gewichtung ist, die dem Knotenabstand ND zugewiesen ist, wobei MD der Überwachungsabstand ist und wobei $K_{MD}$ eine relative Gewichtung ist, die dem Überwachungsabstand MD zugewiesen ist, und wobei AG die Aggregationsmöglichkeit ist und wobei $K_{AG}$ eine relative Gewichtung ist, die der Aggregationsmöglichkeit AG zugewiesen ist, und wobei der Energiepegel EL, der Energieverbrauch EC, der Knotenabstand ND, der Überwachungsabstand MD und die Aggregationsmöglichkeit AG normierte Werte zwischen 0 und 1 sind.

7. Verfahren gemäß einem der Ansprüche 1 bis 6, bei dem der Schritt (RS3) des Definieren eines Routing-Baumes basierend auf einem Minimalspannbaum-Algorithmus (MST-Algorithmus) durchgeführt wird.

8. Verfahren gemäß einem der Ansprüche 2 bis 7, bei dem der Schritt (S6) des Definierens eines Zeitplans die Datenaggregation berücksichtigt, derart, dass, falls der Sensor gemäß dem Routing-Baum Daten des gleichen Datentyps empfängt, die derselbe selbst misst, oder zwei oder mehr Daten von den gleichen Daten empfängt, die Daten des gleichen Datentyps in eine einzige Sendung aggregiert werden.

9. Verfahren gemäß einem der Ansprüche 2 bis 8, bei dem der Schritt des Definierens (S6) eines Zeitplans folgende Schritte aufweist:

Berechnen (NS1), gemäß dem Routing-Baum, einer knotenspezifischen Anzahl (nRx) von Daten, die empfangen werden sollen, und einer knotenspezifischen Anzahl (nTx) von Daten, die gesendet werden sollen, für eine Sendung aller Daten aus der Mehrzahl von Sensorknoten an den Überwachungsknoten für jeden der Sensorknoten und den Überwachungsknoten, und
Zuweisen, zu jedem der Sensorknoten und zu dem Überwachungsknoten, eines kontinuierlichen Zeitintervalls oder einer Mehrzahl von Zeitintervallen zum Empfangen der Daten basierend auf der knotenspezifischen Anzahl von Daten, die empfangen werden sollen, und eines kontinuierlichen Zeitintervalls oder einer Mehrzahl von Zeitintervallen zum Senden der Daten basierend auf der knotenspezifischen Anzahl von Daten, die gesendet werden sollen, wobei unterschiedliche Sendungsverknüpfungen zugewiesen werden können, die Zeitintervalle überlappen, gemäß einem gegebenen Algorithmus, falls dieselben einander nicht stören, und wobei eine Sendungsverknüpfung durch einen Sensorknoten, der Daten sendet, und durch einen entsprechenden Sensorknoten oder Überwachungsknoten, der die Daten empfängt, definiert wird.

10. Verfahren gemäß Anspruch 9, bei dem das Zeitintervall ein Zeitschlitz von einer festen Länge ist und bei dem über eine Sendungsverknüpfung pro Zeitschlitz ein Datenstück gesendet werden kann, und bei dem der Schritt (S6) des Definierens eines Zeitplans auf einem Zuweisen einer Tiefe zu jedem der Sensorknoten basiert, wobei die zugewiesene Tiefe als ein Abstand bei Sensorknoten von dem Überwachungsknoten gemäß dem Routing-Baum definiert wird; und
wobei der Schritt (NS1) des Berechnens derart implementiert wird, dass derselbe iterativ die Zeitschlitze zu den Sensorknoten und dem Überwachungsknoten zuweist, beginnend bei Sensorknoten mit einer Maximaltiefe und fortfahrend zu Sensorknoten mit einer Minimaltiefe, wobei gleiche Zeitschlitze zu Sensorknoten von der gleichen oder einer niedrigeren Tiefe zugewiesen werden, die zu anderen Sendungsverknüpfungen gehören, falls die anderen Sendungsverknüpfungen andere Sendungsverknüpfungen nicht stören, zu denen der tatsächliche Zeitschlitz bereits zugeteilt worden ist.

11. Verfahren gemäß Anspruch 10, bei dem für die Zuweisung von Zeitschlitzen zu den Sensorknoten der Zeitschlitz zu einem Sensorknoten mit einer Maximalpufferverzögerung zugewiesen wird, falls zwei oder mehr Sensorknoten die gleiche Tiefe aufweisen.

12. Computerprogramm mit einem Programmcode zum Durchführen eines Verfahrens gemäß einem der Ansprüche 1 bis 11, wenn das Programm auf einem Computer abläuft.

13. Vorrichtung zum Steuern einer Sendung von Daten aus einer Mehrzahl von Sensorknoten an einen Überwachungsknoten eines Netzwerks, die folgende Merkmale aufweist:

eine Einrichtung zum Erzeugen eines Graphen für die Sensorknoten und den Überwachungsknoten, wobei Kanten des Graphen Paare von Sensorknoten miteinander verbinden oder einen Sensorknoten mit dem Überwachungsknoten verbinden, basierend auf einem Abstand zwischen jeweiligen Knoten;
eine Einrichtung zum Erhalten eines zugeordneten Energiepegels oder eines Energieverbrauchs für jeden der Sensorknoten;
eine Einrichtung zum Zuweisen einer Gewichtung zu jeder Kante des Graphen abhängig von dem Energiepegel oder dem Energieverbrauch und einer Möglichkeit für eine Datenaggregation von Daten, die von einem gleichen Datentyp sind, wobei ein höherer Energiepegel oder ein niedrigerer Energieverbrauch eines Sensorknotens und eine höhere Möglichkeit für eine Datenaggregation in einer Gewichtung resultieren, die bei einem Schritt eines Definierens eines Routing-Baumes eine Wahrscheinlichkeit eines Auswählens einer Kante erhöht, die mit dem Sensorknoten verbunden ist;
eine Einrichtung zum Definieren eines Routing-Baumes, der für jeden der Sensorknoten eine Route zum Senden der Daten aus dem Sensorknoten an den Überwachungsknoten umfasst, derart, dass eine Gesamtgewichtung des Routing-Baumes minimiert ist, wenn eine niedrigere Wichtung eine höhere Wahrscheinlichkeit einer Auswahl anzeigt, oder maximiert, wenn eine höhere Wichtung eine höhere Wahrscheinlichkeit einer Auswahl anzeigt; und
eine Einrichtung zum Zuweisen der Routen zu der Mehrzahl von Sensorknoten und zu dem Überwachungsknoten.

**Revendications**

1. Procédé pour contrôler la transmission de données issues d'une pluralité des noeuds de capteurs (310, 320, 330) à un noeud de moniteur (340) d'un réseau, comprenant:

générer (S1, RS1) un graphique pour lesdits noeuds de capteurs et ledit noeud de moniteur, où les bords dudit graphique relient entre elles des paires de noeuds de capteurs, ou relient un noeud de capteurs audit noeud de moniteur sur base d'une distance entre les noeuds respectifs;
obtenir (S2) pour chacun desdits noeuds de capteurs un niveau d'énergie (430) ou une consommation d'énergie associé;
attribuer (S3, RS2) un poids à chaque bord dudit graphique en fonction dudit niveau d'énergie (430) ou de ladite consommation d'énergie et une possibilité d'agrégation (420) de données d'un même type de données, où un niveau d'énergie supérieur ou une consommation d'énergie inférieure d'un noeud de capteurs et une plus grande possibilité d'agrégation de données résultent en un poids augmentant une probabilité de sélection d'un bord relié audit noeud de capteurs dans une étape de définition d'un arbre d'acheminement;
définir (S4, RS3, RS4) un arbre d'acheminement comportant pour chacun desdits noeuds de capteurs une route pour la transmission desdites données dudit noeud de capteurs audit noeud de moniteur, de sorte qu'un poids d'ensemble dudit arbre d'acheminement soit minimisé si une pondération inférieure indique une plus grande probabilité de sélection ou maximisé si une pondération supérieure indique une plus grande probabilité de sélection; et
attribuer (S5) lesdites routes à ladite pluralité de noeuds de capteurs et audit noeud de moniteur.

2. Procédé selon la revendication 1, comprenant par ailleurs l'étape suivante consistant à:

définir (S6) pour chacun de ladite pluralité de noeuds de capteurs (310, 320, 330) et pour ledit noeud de moniteur (340) un planning pour transmettre ou recevoir lesdites données, où l'étape de définition est basée sur ledit arbre d'acheminement et considère ladite agrégation de données.

3. Procédé selon la revendication 1 ou 2, dans lequel lesdits noeuds de capteurs (310, 320, 330) sont opérationnels pour mesurer, recevoir ou transmettre des données d'une pluralité de types de données différents.

4. Procédé selon l'une des revendications 1 à 3, dans lequel ladite étape (S3, RS2) d'attribution d'un poids dépend par ailleurs de ladite distance (410) entre les noeuds de capteurs respectifs et dépend de ladite distance (450) entre un noeud de capteurs et ledit noeud de moniteur, où une plus grande distance résulte en une probabilité inférieure de sélection d'un bord défini par lesdits noeuds de capteurs respectifs ou ledit noeud de capteurs et ledit noeud de moniteur.

5. Procédé selon l'une des revendications précédentes, dans lequel, pour ladite étape (S3, RS2) d'attribution d'un poids, un paramètre duquel dépend ladite étape est pondéré par rapport à d'autres paramètres par un poids relatif.

6. Procédé selon la revendication 5, dans lequel ladite étape (RS2) d'attribution d'un poids est basée sur une formule suivante:

$$\forall \, e_{ij} \in E,$$

$$wij = K_{EL} * EL + K_{EC} * EC + K_{ND} * ND + K_{MD} * *MD + K_{AG} * AG$$

où E est un ensemble de bords du graphique et où $e_{ij}$ est un bord spécifique dudit ensemble E de bords, où wij est ledit poids d'un bord reliant un noeud à indice i à un autre noeud à indice j, où i, j, = 1, ..., N ou i, j = M, où N est le nombre de ladite pluralité de noeuds de capteurs et où M est l'indice dudit noeud de moniteur, où EL est ledit niveau d'énergie et où $K_{EL}$ est un poids relatif attribué audit niveau d'énergie EL, où EC est ladite consommation d'énergie et où $K_{EC}$ est un poids relatif attribué à ladite consommation d'énergie EC, où ND est ladite distance de noeud et où $K_{ND}$ est un poids relatif attribué à ladite distance de noeud ND de, où MD est ladite distance de moniteur, et où $K_{MD}$ est un poids relatif attribué à ladite distance de moniteur MD, et où AG est ladite possibilité d'agrégation, et où $K_{AG}$ est un poids relatif attribué à ladite possibilité d'agrégation AG, et où ledit niveau d'énergie EL, ladite consommation d'énergie EC, ladite de distance de noeud ND, ladite distance de moniteur MD et ladite possibilité d'agrégation AG sont des valeurs normalisées entre 0 et 1.

7. Procédé selon l'une des revendications 1 à 6, dans lequel ladite étape (RS3) de définition d'un arbre d'acheminement est réalisée sur base d'un algorithme d'élaboration d'un arbre recouvrant minimum (MST).

8. Procédé selon l'une des revendications 2 à 7, dans lequel ladite étape (S6) de définition d'un planning considère ladite agrégation de données de sorte que, au cas où ledit capteur reçoit selon ledit arbre d'acheminement des données du même type de données, mesure ou reçoit lui-même deux données ou plus des mêmes données, lesdites données du même type de données sont agrégées en une seule transmission.

9. Procédé selon l'une des revendications 2 à 8, dans lequel ladite étape de définition (S6) d'un planning comprend les étapes suivantes consistant à:

calculer (NS1) selon ledit arbre d'acheminement pour chacun desdits noeuds de capteurs et ledit noeud de moniteur, un nombre spécifique au noeud (nRx) de données à recevoir et un nombre spécifique au noeud (nTx) de données à transmettre pour une transmission de toutes les données de ladite pluralité de noeuds de capteurs audit noeud de moniteur, et
attribuer à chacun desdits noeuds de capteurs et audit noeud de moniteur un intervalle de temps continu ou une pluralité d'intervalles de temps pour recevoir lesdites données sur base dudit nombre spécifique au noeud de données à recevoir et un intervalle de temps continu ou une pluralité d'intervalles de temps pour lesdites données de transmission sur base dudit nombre spécifique au noeud de données à transmettre, où des liaisons de transmission différentes peuvent être attribuées à des intervalles de temps se recouvrant selon un algorithme donné au cas où elles n'interfèrent pas l'une avec l'autre, et où une liaison de transmission est définie par un noeud de capteurs transmettant des données et par un noeud de capteurs ou noeud de moniteur correspondant recevant lesdites données.

**10.** Procédé selon la revendication 9, dans lequel ledit intervalle de temps est une fenêtre de temps de longueur fixe et dans lequel une donnée peut être transmise par une liaison de transmission par fenêtre de temps, et dans lequel ladite étape (S6) de définition d'un planning est basée sur l'attribution d'une profondeur à chacun desdits noeuds de capteurs, ladite profondeur attribuée étant définie comme distance en noeuds de capteurs dudit noeud de surveillance selon ledit arbre d'acheminement; et
dans lequel ladite étape (NS1) de calcul est mise en oeuvre de sorte qu'elle attribue de manière itérative lesdites fenêtres de temps auxdits noeuds de capteurs et audit noeud de moniteur, en commençant par les noeuds de capteurs à profondeur maximale et en avançant vers les noeuds de capteurs à profondeur minimale, où les mêmes fenêtres de temps sont attribuées aux noeuds de capteurs de même profondeur ou de profondeurs inférieures appartenant à d'autres liaisons de transmission au cas où lesdites autres liaisons de transmission n'interfèrent pas avec les liaisons de transmission auxquelles ladite fenêtre de temps réelle a déjà été attribuée.

**11.** Procédé selon la revendication 10, dans lequel pour ladite attribution de fenêtres de temps auxdits noeuds de capteurs, au cas où deux noeuds de capteurs ou plus ont la même profondeur, ladite fenêtre de temps est attribuée à un noeud de capteurs à retard tampon maximum.

**12.** Programme d'ordinateur présentant un code de programme pour réaliser un procédé selon l'une des revendications 1 à 11 lorsque le programme est exécuté sur un ordinateur.

**13.** Appareil pour contrôler la transmission de données issues d'une pluralité des noeuds de capteurs à un noeud de moniteur d'un réseau, comprenant:

un moyen destiné à générer un graphique pour lesdits noeuds de capteurs et ledit noeud de moniteur, où les bords dudit graphique relient entre elles des paires de noeuds de capteurs, ou relient un noeud de capteurs audit noeud de moniteur sur base d'une distance entre les noeuds respectifs;
un moyen destiné à obtenir pour chacun desdits noeuds de capteurs un niveau d'énergie ou une consommation d'énergie associé;
un moyen destiné à attribuer un poids à chaque bord dudit graphique en fonction dudit niveau d'énergie ou de ladite consommation d'énergie et une possibilité d'agrégation de données d'un même type de données, où un niveau d'énergie supérieur ou une consommation d'énergie inférieure d'un noeud de capteurs et une plus grande possibilité d'agrégation de données résultent en un poids augmentant une probabilité de sélection d'un bord relié audit noeud de capteurs dans une étape de définition d'un arbre d'acheminement;
un moyen destiné à définir un arbre d'acheminement comportant pour chacun desdits noeuds de capteurs une route pour la transmission desdites données dudit noeud de capteurs audit noeud de moniteur, de sorte qu'un poids d'ensemble dudit arbre d'acheminement soit minimisé si une pondération inférieure indique une plus grande probabilité de sélection ou maximisé si une pondération supérieure indique une plus grande probabilité de sélection; et
un moyen destiné à attribuer lesdites routes à ladite pluralité de noeuds de capteurs et audit noeud de moniteur.

# FIG 1A

```
┌─────────────────────┐
│   Generating a graph │
│  for sensor nodes and│ ── S1
│       monitor        │
└─────────────────────┘
          │
          ▼
┌─────────────────────┐
│  Obtaining for each  │
│  sensor node an      │ ── S2
│  associated energy   │
│  level or energy     │
│  consumption         │
└─────────────────────┘
          │
          ▼
┌─────────────────────┐
│ Assigning a weight   │
│ to each edge of the  │
│ graph based on       │ ── S3
│ energy level or      │
│ consumption and      │
│ data aggregation     │
└─────────────────────┘
          │
          ▼
┌─────────────────────┐
│ Defining a routing   │
│ tree including       │
│ routes from all      │ ── S4
│ sensor nodes to the  │
│ monitor node         │
└─────────────────────┘
          │
          ▼
┌─────────────────────┐
│ Assigning the routes │
│ to the sensor nodes  │ ── S5
│ and the monitors node│
└─────────────────────┘
```

# FIG 1B

> Defining a schedule for
> sensor nodes and monitors
> node based on
> - a routing tree comprising
>   the sensor nodes and
>   monitor nodes,
> considering
> - a data aggregation
> - possibility

S6

## FIG 2A

Location parameter types

Energy level
transmission range

## FIG 2B

## FIG 2C

RS/NS
Round 1

RS/NS
Round 2

DD Period 1    DD Period 2                    DD Period n

t

Idle

# FIG 3

310 — ⬤ ◯ ⬤ ◯ ⬤ ⬤ ⊗

320 — ◯ ⬤ ⬤ ◯ ◯ ⬤ ◯ (M)
340

330 — ⊗ ⬤ ⬤ ⊗ ◯ ⬤ ◯

# FIG 4A

430 — ⇧ 🔋⊗

Connectivity
to Monitor

330 — ⊗ — 330

320 — ◯

330 — ⊗

Node
Distance — 450

◯ ← ◯ — 320

410

⊗

Aggregation — 310

420

# FIG 4B

RS Algorithm

Rs1 — 1. Define a labeled graph G with edges connecting nodes within the communication range;

Rs2 — 2. Define a weihted graph Gw=(G,W) by assigning the edges of G weights wij that take into account relevant network parameters;

Rs3 — 3. Build the MST

Rs4 — 4. Define a directed tree rooted at the Monitor

## FIG 5

1)

2)

3)

## FIG 6

1)

2)

3)

# FIG 7

a)

b)

c)

d)

EP 1 835 668 B1

# FIG 8A

```
NS Algorithm

NS1 ⟶  compute number of transmit (nTx) and reseive (nRx) slots for each node
NS2 ⟶  timeslot = 1;
        while there is a node with data to send {
            depth = depthMax;
            while depth > 0 {
                find nodes with data to send (nTx ≠ 0);
                select note with max buffer delay and not interfering with other active nodes;
                update counters (nTx, nRx, buffer delay);
                depth - - ;
            }
        update buffer delay counter for all nodes;
        timeslot + + ;
        }
```

EP 1 835 668 B1

# FIG 8B

a)

b)

# FIG 9

EP 1 835 668 B1

# FIG 10

a)

b)

## FIG 10C

FIG 11

a)             b)             c)

FIG 12

a)             b)

# FIG 13

Network Life Time (# of rounds)

1400
1200
1000
800
600
400
200

Fig. 11a          Fig. 11b          Fig. 11c

Case

▨ Routes Fig. 12b
▦ Routes Fig. 12a
☐ RS/NS

## FIG 14A

## FIG 14B

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Non-patent literature cited in the description

- **I. AKYILDIZ ; W. SU ; W. SNAKRASUBRAMANIAM ; E. CAYIRCI.** *A Survey on Sensor Networks. IEEE Communications,* August 2002
- **YE, J. HEIDEMANN ; D. ESTRIN.** An Energy-efficient MAC Protocol for Wireless Sensor Networks. *INFOCOM,* 2002
- **G. LU ; B. KRISHNAMACHARI ; C. RAGHAVENDRA.** An adaptive energy-efficient and low latency MAC for data Gathering in wireless sensor networks. *18th International Parallel and Distributed Processing Symposium*
- **V.ANNAMALAI ; S. GUPTA ; L.SCHWIEBERT.** On Tree-Based Convergecasting in Wireless Sensor Networks. *IEEE Wireless Communications and Networking Conference,* 2003
- **S. COLERI.** Pedamacs: Power Efficient and Delay Aware Medium Access Protocol for Sensor Networks. *M.S. Thesis,* December 2002
- **K. ARISHA ; M. YOUNIS ; M. YOUSSEF.** Energy-Aware TDMA-Based MAC for Sensor Networks. *Proceedings of the IEEE Integrated Management of Power Aware Communications, Computing and Networking,* 2002
- **W. HEINZELMANN ; A. CHANDRAKASAN ; H. BALAKRISHNAN.** Energy-efficient communication protocols for wireless microsensor networks. *Proceedings of Hawaii International Conference on System Sciences,* January 2000
- Time Synchronization and Calibration in Wireless Sensor Networks. **K. ROMER ; P. BLUM ; L. MEIER.** Handbook on Sensor Networks: Algorithms and Architectures. John Wiley, September 2005
- **I. AKYILDIZ ; W. SU ; W. SNAKRASUBRAMANIAM ; E. CAYIRCI.** *A Survey on Sensor Networks. IEEE Communications,* August 2002
- **T. CORMEN ; C. LEISERSON ; R. RIVEST.** Introduction to Algorithms. Mc Graw Hill, 1990